# EUROPEAN PATENT APPLICATION

(11) **EP 3 624 551 A1**
(43) Date of publication of application: **18.03.2020**
(21) Application number: 18821503.2
(22) Date of filing: 18.05.2018
(51) Int. Cl.: H04W 88/06

(54) **INFORMATION PROCESSING METHOD AND APPARATUS**

(30) Priority: 24.06.2017 CN 201710489299
(71) Applicant: Huawei Technologies Co. Ltd., Shenzhen, Guangdong 518129 (CN)
(72) Inventor: TANG, Tingfang, Shenzhen Guangdong 518129 (CN); LI, Yan, Shenzhen Guangdong 518129 (CN)
(74) Representative: MERH-IP Matias Erny Reichl Hoffmann Patentanwälte PartG mbB
(86) International application number: PCT/CN2018/087574
(87) International publication number: WO 2018/233419

(57) **Abstract**

Embodiments of this application provide an information processing method and an apparatus, and relate to the field of communications technologies. The method includes: receiving, by a policy control function network element, information about a first application from an application function network element, and associating the information about the first application with a packet data unit PDU session corresponding to a first internet protocol IP address of user equipment; receiving, by the policy control function network element, a second IP address of the user equipment from a session management function network element; and associating, by the policy control function network element, the information about the first application with a PDU session corresponding to the second IP address. According to the method, signaling exchange between network elements in a communications system and a delay of session establishment can be reduced after an IP address of user equipment changes.

## Description

This application claims priority to Chinese Patent Application No. 201710489299.5, filed with the Chinese National Intellectual Property Administration on June 24, 2017, and entitled "INFORMATION PROCESSING METHOD AND APPARATUS", which is incorporated herein by reference in its entirety.

### TECHNICAL FIELD

This application relates to the field of communications technologies, and in particular, to an information processing method and an apparatus.

### BACKGROUND

In a communications system, different services have different continuity requirements. For example, in an internet protocol (Internet Protocol, IP) multimedia subsystem (IP Multimedia Subsystem, IMS), a voice service has a high requirement for continuity, an IP address of user equipment remains unchanged in a service period of the voice service, and data transmission is not interrupted. However, services such as a web browsing service and a multi-path transmission service have a lower requirement for continuity, the IP address of the user equipment may change in a service period, and data transmission is interrupted.

Currently, for a service with a relatively low continuity requirement, in a service period of the service, if user equipment moves from an original service area to a new service area and an IP address of the user equipment changes, an application function (Application Function, AF) session and related information, a data resource block, policy information, and the like of the user equipment in the original service area are released or deleted, and reestablishment is performed in the new service area, thereby increasing signaling exchange and a delay of session establishment.

### SUMMARY

Embodiments of this application provide an information processing method and an apparatus for reducing signaling exchange between network elements in a communications system and a delay of session establishment after an IP address of user equipment changes.

To achieve the foregoing objectives, the embodiments of this application use the following technical solutions.

According to a first aspect, an information processing method is provided, where the method includes: receiving, by a policy control function network element, information about a first application from an application function network element, and associating the information about the first application with a packet data unit PDU session corresponding to a first internet protocol IP address of user equipment, where the first application may be an application that is insensitive to change of an IP address of the user equipment, such as a web browsing application, a download service, and an on-demand video service; receiving, by the policy control function network element, a second IP address of the user equipment from a session management function network element; and associating, by the policy control function network element, the information about the first application with a PDU session corresponding to the second IP address. In the foregoing technical solution, the policy control function network element receives the information about the first application from the application function network element, associates the information about the first application with the PDU session corresponding to the first IP address of the user equipment, receives the second IP address of the user equipment from the session management function network element, and associates the information about the first application with the PDU session corresponding to the second IP address, to implement reuse of the information about the first application, thereby reducing signaling exchange and a delay of session establishment, and improving user experience.

In this application, the information about the first application may be referred to as AF session information, or may have another name. The information about the first application is description information that is about an application accessed by the user equipment and that is sent by the application function network element to the policy control function network element, and the information about the first application is used to generate a policy and charging control rule (Policy and Charging Control rule, PCC rule).

In a possible implementation of the first aspect, the associating the information about the first application with a packet data unit PDU session corresponding to a first internet protocol IP address of user equipment includes: identifying or generating, by the policy control function network element based on the information about the first application, a policy session rule applicable to the packet data unit PDU session corresponding to the first internet protocol IP address. The associating the information about the first application with the PDU session corresponding to the second IP address includes: reusing, by the policy control function network element, the information about the first application, and identifying or generating, based on the information about the first application, a policy session rule applicable to the packet data unit PDU session corresponding to the second IP address, or directly reusing, by the policy control function network element for the packet data unit PDU session corresponding to the second IP address, the policy session rule applicable to the packet data unit PDU session corresponding to the first IP address.

In a possible implementation of the first aspect, the receiving, by the policy control function network element, a second IP address of the user equipment from a session management function network element includes: receiving, by the policy control function network element, a session establishment request from the session management function network element, where the session establishment request is used to establish the PDU session corresponding to the second IP address, and the session establishment request carries the second IP address. The session establishment request may further carry first information, and the first information is used to indicate that the PDU session corresponding to the second IP address is a reestablished PDU session. In the foregoing implementation, the policy control function network element may reuse the information about the first application when reestablishing the PDU session, thereby reducing signaling exchange and a delay of session establishment during reestablishment.

In a possible implementation of the first aspect, the policy control function network element receives a session deletion request from the session management function network element, and the session deletion request is used to delete the PDU session corresponding to the first IP address. The policy control function network element reserves the information about the first application. The policy control function network element receives a session modification request from the session management function network element, and the session modification request is used to modify the first IP address into the second IP address. The policy control function network element associates the information about the first application and the PDU session corresponding to the second IP address after the IP address is modified. In the foregoing possible implementation, the policy control function network element may reserve the information about the first application in a session deletion process, so that the information about the first application may be reused subsequently, thereby reducing signaling exchange and a delay of session establishment. The policy control function network element may reuse the information about the first application in a procedure of modifying a session from the first IP address to the second IP address, thereby reducing signaling exchange and a delay of session establishment.

In a possible implementation of the first aspect, the information about the first application includes flow description information of the first application; and the method further includes: learning, by the policy control function network element from the application function network element, that the information about the first application can be reused after the first IP address changes.

In this application, the meaning that the information about the first application can be reused after the first IP address changes may be expressed in a plurality of manners. For example, the information about the first application is applicable to a plurality of IP addresses, or the first application is insensitive to the IP address, the first application allows change of the IP address, the information about the first application remains valid after the IP address changes, and the information about the first application may be used by the user equipment to access different PDU sessions of a same application.

In a possible implementation of the first aspect, the learning, by the policy control function network element from the application function network element, that the information about the first application can be reused after the first IP address changes includes that: the information about the first application does not include the first IP address; or the information about the first application includes indication information, and the indication information is used to indicate that the information about the first application can be reused after the first IP address changes. The indication information may be carried when the information about the first application does not include the first IP address, or may be carried when the information about the first application includes the first IP address.

In this application, the information about the first application can be reused after the first IP address changes, and may be at a session granularity or a flow granularity. The session granularity corresponds to that information about the first application of all flows included in the first application can be reused after the first IP address changes, and the flow granularity corresponds to that information about the first application of a specified flow can be reused after the first IP address changes.

In the foregoing possible implementations, the policy control function network element may learn, from the application function network element in different manners, that the information about the first application can be reused after the first IP address changes, thereby improving learning flexibility of the policy control function network element.

According to a second aspect, an information processing method is provided, where the method includes: sending, by an application function network element, information about a first application to a policy control function network element, where the information about the first application includes flow description information of the first application; and indicating, by the application function network element to the policy function network element, that the information about the first application can be reused after a first internet protocol IP address of user equipment changes. In the foregoing technical solution, the application function network element indicates, to the policy function network element, that the information about the first application can be reused after the first IP address of the user equipment changes, and the information about the first application includes flow description information of the first application, so that the policy function network element may reuse the information about the first application after the first IP address is learned, thereby reducing signaling exchange and a delay of session establishment, and improving user experience.

In a possible implementation of the second aspect, the indicating, by the application function network element to the policy function network element, that the information about the first application can be reused after a first IP address changes includes that: the information about the first application does not include the first IP address; or the information about the first application includes indication information, and the indication information is used to indicate that the information about the first application can be reused after the first IP address changes. The indication information may be carried when the information about the first application does not include the first IP address, or may be carried when the information about the first application includes the first IP address. The information about the first application can be reused after the first IP address changes, and may be at a session granularity or a flow granularity. The session granularity corresponds to that information about the first application of all flows included in the first application can be reused after the first IP address changes, and the flow granularity corresponds to that information about the first application of a specified flow can be reused after the first IP address changes. In the foregoing possible implementation, the application function network element may indicate, to the policy function network element in different manners, that the information about the first application can be reused after the first IP address changes, thereby improving indication flexibility of the application function network element.

According to a third aspect, an information processing method is provided, where the method includes: receiving, by a session management function network element from a policy control function network element, a policy rule of a PDU session corresponding to a first IP address of user equipment; and after establishing a PDU session corresponding to a second IP address of the user equipment or modifying the first IP address into the second IP address, associating, by the session management function network element, the policy rule with the PDU session corresponding to the second IP address. In the foregoing technical solution, after establishing the PDU session corresponding to the second IP address of the user equipment or modifying the first IP address into the second IP address, the session management function network element associates the policy rule of the PDU session corresponding to the first IP address and the PDU session corresponding to the second IP address, so that reuse of the policy rule may be implemented, thereby reducing signaling exchange and a delay of session establishment, and improving user experience.

In a possible implementation of the third aspect, the method further includes: learning, by the session management function network element from the policy control function network element, that the policy rule can be reused after the first IP address changes. In the foregoing possible implementation, the session management function network element may learn from the policy control function network element that the policy rule can be reused after the first IP address changes, so that the policy rule is reused for the PDU session corresponding to the second IP address, thereby reducing signaling exchange and a delay of session establishment, and improving user experience.

In a possible implementation of the third aspect, the method further includes: determining, by the session management function network element, that a data radio bearer DRB of the PDU session corresponding to the first IP address can be reserved after the first IP address changes; and sending, by the session management function network element, first information to the user equipment, where the first information is used to indicate that the DRB of the PDU session corresponding to the first IP address can be reserved after the first IP address changes. The data radio bearer DRB is a data transmission channel between the user equipment and an access network device. In the foregoing possible implementation, the session management function network element may instruct the user equipment to reserve the DRB of the PDU session corresponding to the first IP address, so that the reserved DRB can be reused subsequently, signaling exchange and a delay of session establishment can be reduced, and user experience is improved.

In a possible implementation of the third aspect, the method further includes: sending, by the session management function network element to an access network device, identification information of the PDU session corresponding to the first IP address and identification information of the PDU session corresponding to the second IP address, and the PDU session corresponding to the second IP address is a PDU session obtained by reusing the DRB. In the foregoing possible implementation, the session management function network element may send, to the access network device, the identification information of the PDU session corresponding to the first IP address and the identification information of the PDU session corresponding to the second IP address, so that the access network device reuses the reserved DRB for the PDU session corresponding to the second IP address, thereby reducing signaling exchange and a delay of session establishment, and improving utilization of the DRB.

In a possible implementation of the third aspect, the method further includes: obtaining, by the session management function network element, a flow identifier of a first flow in the PDU session corresponding to the first IP address, and sending the flow identifier to an access network device, where the flow identifier is used to associate a DRB corresponding to the first flow; determining, by the session management function network element, that the DRB of the first flow can be reserved after the first IP address changes; and sending, by the session management function network element, second information to the user equipment, where the second information is used to indicate that the DRB of the first flow can be reserved after the first IP address changes. In the foregoing possible implementation, the session management function network element may associate the flow identifier of the first flow with the DRB of the first flow, and instruct the user equipment to reserve the DRB of the first flow, so that the DRB can be reused subsequently, thereby reducing signaling exchange and a delay of session establishment, and improving utilization of the DRB.

In a possible implementation of the third aspect, the method further includes: sending, by the session management function network element to the access network device, a flow identifier of each flow in the PDU session corresponding to the second IP address; or sending, by the session management function network element to the access network device, a flow identifier of a second flow in the PDU session corresponding to the second IP address and the flow identifier of the first flow, where the second flow is a flow obtained by reusing the DRB of the first flow. In the foregoing possible implementation, the session management function network element may send different flow identifiers to the access network device, so that the access network device reuses the reserved DRB based on a corresponding flow identifier, thereby reducing signaling exchange and a delay, and improving user experience.

According to a fourth aspect, an information processing method is provided, where the method includes: receiving, by an access network device from a session management function network element, a flow identifier of a first flow in a PDU session corresponding to a first IP address of user equipment; associating, by the access network device, the flow identifier of the first flow with a data radio bearer DRB of the first flow; and in a procedure of releasing the PDU session corresponding to the first IP address, reserving, by the access network device, the PDU session corresponding to the first IP address or the DRB of the first flow, where the DRB can be reused after the first IP address changes. In the foregoing technical solution, the access network device may reserve the PDU session corresponding to the first IP address or the DRB of the first flow, so that the reserved DRB can be reused subsequently, so that signaling exchange and a delay of session establishment can be reduced, and user experience is improved.

In a possible implementation of the fourth aspect, the method further includes: learning, by the access network device from the session management function network element, that the PDU session corresponding to the first IP address or the DRB of the first flow can be reused after the first IP address changes. In the foregoing possible implementation, the access network device may reserve the PDU session corresponding to the first IP address or the DRB of the first flow when learning that the PDU session corresponding to the first IP address or the DRB of the first flow can be reused after the first IP address changes, so that only a DRB that may be reused is reserved, and a DRB that does not need to be reserved is released, thereby improving utilization of the DRB.

In a possible implementation of the fourth aspect, the method further includes: when establishing a PDU session corresponding to a second IP address of the user equipment or modifying the first IP address into the second IP address, reusing, by the access network device, the PDU session corresponding to the first IP address or the DRB of the first flow. In the foregoing possible implementation, the access network device may reuse the PDU session corresponding to the first IP address or the DRB of the first flow, so that signaling exchange and a delay of session establishment can be reduced, and user experience is improved.

It should be noted that the IP address in this application may be an IPv4 (IP version 4) address, may be an IPv6 (IP version 6) address, or may be a prefix of the IPv6 address.

According to another aspect of this application, a policy control function network element is provided. The policy control function network element may implement a function performed in any one of the first aspect or the possible implementations of the first aspect. The function may be implemented by hardware, or may be implemented by hardware by executing corresponding software. The hardware or software includes one or more modules corresponding to the foregoing function.

In a possible implementation, a structure of the policy control function network element includes a processor, a memory, a communications interface and a bus, and the processor, the memory, and the communications interface are connected by using the bus. Code and data are stored in the memory. The processor is configured to support the policy control function network element in performing corresponding functions in the method according to any one of the first aspect or the possible implementations of the first aspect. The communications interface is configured to support communication between the policy control function network element and another network element.

According to another aspect of this application, an application function network element is provided. The application function network element may implement a function performed in any one of the second aspect or the possible implementations of the second aspect. The function may be implemented by hardware, or may be implemented by hardware by executing corresponding software. The hardware or software includes one or more modules corresponding to the foregoing function.

In a possible implementation, a structure of the application function network element includes a processor, a memory, a communications interface and a bus, and the processor, the memory, and the communications interface are connected by using the bus. Code and data are stored in the memory. The processor is configured to support the application function network element in performing corresponding functions in the method according to any one of the second aspect or the possible implementations of the second aspect. The communications interface is configured to support communication between the application function network element and another network element.

According to another aspect of this application, a session management function network element is provided. The session management function network element may implement a function performed in any one of the third aspect or the possible implementations of the third aspect. The function may be implemented by hardware, or may be implemented by hardware by executing corresponding software. The hardware or software includes one or more modules corresponding to the foregoing function.

In a possible implementation, a structure of the session management function network element includes a processor, a memory, a communications interface and a bus, and the processor, the memory, and the communications interface are connected by using the bus. Code and data are stored in the memory. The processor is configured to support the session management function network element in performing corresponding functions in the method according to any one of the third aspect or the possible implementations of the third aspect. The communications interface is configured to support communication between the session management function network element and another network element.

According to another aspect of this application, an access network device is provided, and the access network device may implement a function performed in any one of the fourth aspect or the possible implementations of the fourth aspect. The function may be implemented by hardware, or may be implemented by hardware by executing corresponding software. The hardware or software includes one or more modules corresponding to the foregoing function.

In a possible implementation, a structure of the access network device includes a processor, a memory, a communications interface and a bus, and the processor, the memory, and the communications interface are connected by using the bus. Code and data are stored in the memory. The processor is configured to support the access network device in performing corresponding functions in the method according to any one of the fourth aspect or the possible implementations of the fourth aspect. The communications interface is configured to support communication between the access network device and another network element.

According to another aspect of this application, a communications system is provided, where the system includes user equipment, and a policy control function network element that implements the functions of any one of the first aspect or the possible implementations of the first aspect, and/or an application function network element that implements the functions of any one of the second aspect or the possible implementations of the second aspect, and/or a session management function network element that implements the functions of any one of the third aspect or the possible implementations of the third aspect, and/or an access network device that implements the functions of any one of the fourth aspect or the possible implementations of the fourth aspect.

According to another aspect of this application, a computer-readable storage medium is provided, where the computer-readable storage medium stores an instruction, and when the instruction is run on a computer, the computer is enabled to perform the information processing method in the foregoing aspects.

According to another aspect of this application, a computer program product including an instruction is provided, where when the computer program product is run on a computer, the computer is enabled to perform the information processing method in the foregoing aspects.

According to another aspect of this application, a chip system is provided, where the chip system includes a processor, and the processor is configured to support a policy control function network element, an application function network element, a session management function network element, or an access network device in implementing functions in the foregoing aspects, for example, generating or processing information in the foregoing methods. In a possible implementation, the chip system further includes a memory, and the memory is configured to store a program instruction and data that are necessary for the policy control function network element, the application function network element, the session management function network element, or the access network device. The chip system may include a chip, or may include a chip and another discrete device.

It may be understood that the apparatus, the computer storage medium, or the computer program product of any one of the foregoing information processing methods are used to perform corresponding method described above. Therefore, for a beneficial effect that can be achieved by the apparatus, the computer storage medium, or the computer program product, reference may be made to the beneficial effect in the corresponding method described above, and details are not described herein again.

### BRIEF DESCRIPTION OF DRAWINGS

FIG. 1 is a system architectural diagram of a communications system according to an embodiment of this application;
FIG. 2 is a schematic flowchart of an information processing method according to an embodiment of this application;
FIG. 3 is a schematic flowchart of an AF session establishment according to an embodiment of this application;
FIG. 4 is a schematic flowchart of establishment processing of a PDU session according to an embodiment of this application;
FIG. 5 is a schematic flowchart of modification processing of a PDU session according to an embodiment of this application;
FIG. 6 is a schematic flowchart of deletion processing of a PDU session according to an embodiment of this application;
FIG. 7 is a schematic flowchart of an information processing method according to an embodiment of this application;
FIG. 8 is a schematic flowchart of another information processing method according to an embodiment of this application;
FIG. 9 is a schematic flowchart of still another information processing method according to an embodiment of this application;
FIG. 10A and FIG. 10B is a schematic diagram of a release and reestablishment procedure of a PDU session according to an embodiment of this application;
FIG. 11A and FIG. 11B is a schematic diagram of another release and reestablishment procedure of a PDU session according to an embodiment of this application;
FIG. 12 is a schematic structural diagram of a policy control function network element according to an embodiment of this application;
FIG. 13 is a schematic structural diagram of another policy control function network element according to an embodiment of this application;
FIG. 14 is a schematic structural diagram of an application function network element according to an embodiment of this application;
FIG. 15 is a schematic structural diagram of another application function network element according to an embodiment of this application;
FIG. 16 is a schematic structural diagram of a session management function network element according to an embodiment of this application;
FIG. 17 is a schematic structural diagram of another session management function network element according to an embodiment of this application;
FIG. 18 is a schematic structural diagram of an access network device according to an embodiment of this application; and
FIG. 19 is a schematic structural diagram of another access network device according to an embodiment of this application.

### DESCRIPTION OF EMBODIMENTS

Technical solutions described in this application may be applicable to communications systems, such as a 4th generation (4G) mobile communications system, a 5th generation (5G) mobile communications system, and another similar communications system in the future. For clarity, only the 5G mobile communications system is described as an example herein.

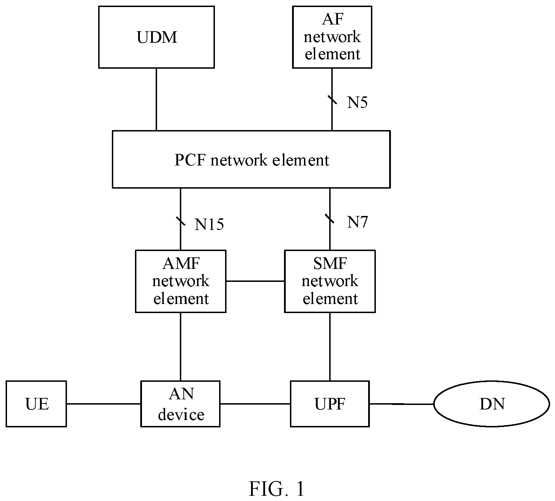

A system architecture of a communications system applied in embodiments of this application is shown in FIG. 1. The system architecture includes: user equipment (User Equipment, UE), an access network (Access Network, AN) device, a user plane function (User Plane Function, UPF) network element, a session management function (Session Management Function, SMF) network element, an access and mobility management function (Access and Mobility Management Function, AMF) network element, a policy control function (Policy Control Function, PCF) network element, a unified data management (Unified Data Management, UDM) network element, and an application function (Application Function, AF) network element.

The AN may also be a radio access network (Radio Access Network, RAN), and the user equipment may perform external connection and interaction by using the access network. The access network device may be a base station or an access point device, and the user equipment may access a core network of a mobile communications system by using the base station or the access point device. In the embodiments of this application, the user equipment may establish a packet data unit (Packet Data Unit, PDU) session, receive, by using the PDU session, a policy customized for an application or a service, and perform the policy. The UPF network element may be a user plane device of the core network and configured to transmit user plane data and provide a user plane service for the PDU session of the user equipment. The UPF network elements may also be referred to as a UPF n or UPF device. The SMF network element may be a control plane device of the core network, and may be configured to provide a control plane service for the PDU session of the user equipment, and manage the PDU session, a QoS parameter, and the like. The SMF network element is further responsible for allocating an internet protocol (Internet Protocol, IP) address for the user equipment, selecting a UPF for the user equipment and the like. The SMF network elements may also be referred to as an SMF or SMF device. The PCF network element may be a core network device and is responsible for customizing a policy for the user equipment and sending the policy to the user equipment and the access network by using the UPF. The PCF network elements may also be referred to as a PCF or PCF device. The AMF network element is configured to authenticate and authorize a user equipment, manage mobility of the user equipment and the like, and forward a message exchanged between the SMF network element and the access network device. The AMF network element may also be referred to as an AMF or AMF device. The UDM is configured to store information such as user subscription data. The AF network element may be an application server and may be configured to interact with the PCF network element to customize a policy for the application. In addition, the communications system may include a data network (Data Network, DN). The user equipment may access the DN by using the UPF and exchange information with the DN.

For a PDU session of user equipment, the PDU session may include a connection between the PCF network element and the SMF network element. The connection between the PCF network element and the SMF network element may be referred to as a protocol data unit connectivity access network (Protocol Data Unit Connectivity Access Network, PDU-CAN) session. A policy rule may be obtained by using the PDU-CAN session. When the PCF identifies or generates the policy rule for the PDU session, reference may be made to corresponding AF session information obtained from the AF, for example, the AF session information is information about a first application in this application. In the 5G communications system shown in FIG. 1, the AF session is a connection of an interface N5 between the AF and the PCF, and the PDU-CAN session is a connection of an interface N7 between the SMF and the PCF. In addition, an interface between the AMF and the PCF may be N15.

Currently, to meet continuity requirements of different applications and services, the 5G communications system provides three different session and service continuity modes (Session and Service Continuity mode, SSC): SSC 1, SSC 2 and SSC 3, respectively. For a service that supports the SSC 2 mode, one UPF has a specified service area, that is, for a related service, an initially accessed UPF allocates an IP address to user equipment. Under triggering of conditions such as mobility of the user equipment and a local policy, when the user equipment moves out of the service area of an original UPF, a corresponding new UPF is selected as an anchor (anchor) UPF for the user equipment in a service area in which the user equipment is located, to provide a service of the related service, and the new UPF allocates a new IP address to the user equipment. Therefore, the IP address of the user equipment changes in an entire lifecycle of the service and transmission is interrupted.

For a service that supports the SSC 3 mode, under triggering of conditions such as mobility of the user equipment and a local policy, during movement of the user equipment, a new anchor UPF may be selected for the user equipment to establish a new connection before a connection between the user equipment and an original anchor UPF is released. Therefore, the IP address of the user equipment changes in an entire lifecycle of the service, and two IP addresses may serve for the user equipment simultaneously.

In the prior art, when user equipment moves from an original service area to a new service area, and an IP address of the user equipment changes, an AF session, a data resource block, policy information and the like of the user equipment in the original service area are released or deleted, and are reestablished in the new service area, thereby increasing signaling exchange and a delay of session establishment. An information processing method provided in this embodiment of this application is applicable to a scenario in which an IP address used by a user equipment to access a same application changes when the user equipment moves, and an AF session and related information, a data resource block, policy information and the like in an original service area may be reused after the IP address of the user equipment changes, thereby reducing signaling exchange and a delay of session establishment, and improving user experience. In addition, this application may also be applicable to a scenario of an IP address change triggered by overloading of an UPF or another reason.

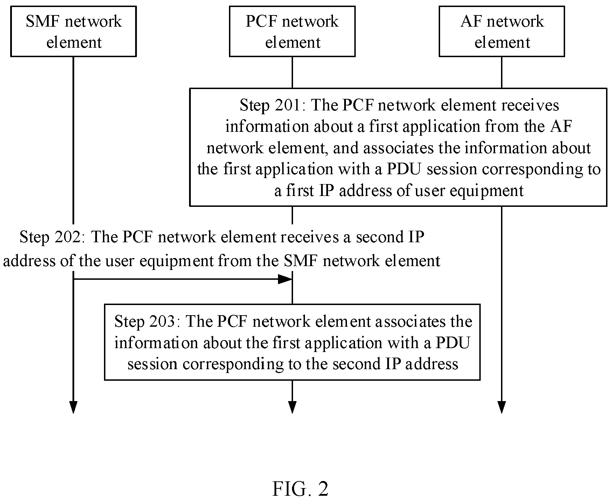

FIG. 2 is a schematic flowchart of an information processing method according to an embodiment of this application. Referring to FIG. 2, the method includes the following steps.

Step 201: A PCF network element receives information about a first application from an AF network element, and associates the information about the first application with a PDU session corresponding to a first IP address of user equipment.

In this application, the information about the first application may be referred to as AF session information, or may have another name. The information about the first application is description information that is about an application accessed by the user equipment and that is sent by the application function network element to the policy control function network element, and the information about the first application is used to generate a policy and charging control rule (policy and charging control rule, PCC rule). For example, the AF session information may be transferred by using an AF session.

The AF network element may send the information about the first application to the PCF network element. When the PCF network element receives the information about the first application sent by the AF network element, the PCF network element may associate the information about the first application with the PDU session corresponding to the first IP address of the user equipment. For example, that the PCF network element associates the information about the first application with the PDU session corresponding to the first IP address of the user equipment includes: identifying or generating, by the PCF network element based on the AF session information, namely, the information about the first application, a policy rule applicable to the packet data unit PDU session corresponding to the first internet protocol IP address, and recording a correspondence between an AF session and a PDU session corresponding to the first IP address. Therefore, the foregoing policy rule can be applicable to the PDU session corresponding to the first IP address. For example, the recorded PDU session information corresponding to the first IP address may include a user equipment identifier, packet data network (Packet Data Network, PDN) information and the first IP address, and may further include an identifier of a session corresponding to the first IP address. For association of an AF session and a PDU session, if there is a PDU-CAN session, the AF session and the PDU session can be associated by bonding the AF session and the PDU-CAN session, so that a corresponding policy rule is provided for a flow of the PDU session. The PDU-CAN session may also have another name, and corresponds to a connection between the PCF network element and an SMF network element. Information about the PDU session corresponding to the first IP address may also be directly transmitted to the PCF network element by using the connection between the PCF network element and the SMF network element, to enable the PCF network element to implement association between the AF session information and the PDU session.

The first application may be an application established for the user equipment, and the first application may be an application that has a relatively low requirement for service continuity, such as a web browsing application, a download service, and an on-demand video service. The PDU session corresponding to the first IP address is a PDU session established for the user equipment, and the first IP address is an IP address allocated to the user equipment when the user equipment establishes the PDU session.

In addition, the information about the first application, namely, the AF session information, may include at least one of the following information: identification information of the first application, flow description information of the first application, and the like. The identification information of the first application is used to uniquely identify the first application. For example, the identification information of the first application may be an identification code of the first application and the like. The flow description information of the first application is flow description information of a flow included in a first application accessed by the user equipment. Based on the flow description information, corresponding policy information may be generated.

Optionally, the AF network element may send information about the first application to the PCF network element, where the information about the first application includes the flow description information of the first application, and the AF network element may further indicate, to the PCF network element, that the information about the first application can be reused after the first IP address of the user equipment changes. For example, the flow description information of the first application can be reused after the first IP address of the user equipment changes. Correspondingly, the PCF network element may learn from the AF network element that the information about the first application can be reused after the first IP address changes.

In this application, herein that the information about the first application can be reused after the first IP address changes may be understood as follows: The information about the first application is applicable to a plurality of IP addresses, or the first application is insensitive to the IP address, the first application allows change of the IP address, the information about the first application remains valid after the IP address changes, and the information about the first application may be used by the user equipment to access different PDU sessions of a same application, or the like.

In this embodiment of this application, the AF network element may indicate, to the PCF in the following manners, that the information about the first application can be reused after the first IP address changes: Manner 1: The information about the first application does not include the first IP address. Manner 2: The information about the first application includes indication information, where the indication information is used to indicate that the information about the first application can be reused after the first IP address changes, and the indication information may be carried when the information about the first application does not include the first IP address, or may be carried when the information about the first application includes the first IP address. Correspondingly, when the AF network element indicates to the PCF in the manner 1, if the information about the first application received by the PCF network element does not include the first IP address, the PCF network element may learn that the information about the first application can be reused after the first IP address changes. When the AF network element indicates to the PCF in the manner 2, if the information about the first application received by the PCF network element includes the indication information, the PCF network element may learn, based on the indication information, that the information about the first application can be reused after the first IP address changes. Optionally, the AF network element may indicate, to the PCF in a session establishment message, that the information about the first application can be reused after the first IP address changes, and the session establishment message may be used to establish the AF session.

The information about the first application can be reused after the first IP address changes, and may be at a session granularity or a flow granularity. The session granularity corresponds to that information about the first application of all flows included in the first application can be reused after the first IP address changes, and the flow granularity corresponds to that information about the first application of a specified flow can be reused after the first IP address changes. The session granularity may also be referred to as an application granularity. The following separately describes cases of a session granularity indication and a flow granularity indication in detail.

Specifically, the AF session establishment message includes a field used to transmit an IP address of the user equipment and a field used to transmit the flow description information. When the session establishment message sent by the AF network element to the PCF network element does not include the first IP address, that is, the field used to transmit the IP address of the user equipment does not carry the first IP address of the user equipment, the AF network element may indicate, to the PCF, that the information about the first application can be reused after the first IP address of the user equipment changes. If a field or information at a same level as the field used to transmit the flow description information does not carry the first IP address of the user equipment, it indicates that the indication is the application granularity indication; to be specific, the information about the first application of all flows of the first application can be reused. If a field used to transmit flow description information of a specified flow does not carry the first IP address of the user equipment, it indicates that the indication is the flow granularity indication; to be specific, the flow description information of the specified flow included in the first application can be reused. For example, if the indication information is carried in flow description information of a flow, it indicates that the flow description information of the flow can be reused.

When the session establishment message includes the indication information, and when the indication information is used to indicate that the information about the first application can be reused after the first IP address changes, if a field used to transmit the indication information is at a same level as the field used to transmit the flow description information, it indicates that the indication is the application granularity indication; to be specific, the information about the first application of all flows of the first application can be reused. If the indication information is carried in the field used to transmit the flow description information of the specified flow, it indicates that the indication is the flow granularity indication; to be specific, the flow description information of the specified flow included in the first application can be reused. For example, if the indication information is carried in flow description information of a flow, it indicates that the flow description information of the flow can be reused.

Further, if the session establishment message that is sent by the AF network element to the PCF and that is used to establish the AF session includes the first IP address of the user equipment, the first IP address may be used to instruct the PCF network element not to reuse the flow description information of the first application after the first IP address of the user equipment changes. Specifically, if the field that is used to transmit the IP address of the user equipment and that is included in the session establishment message carries the IP address of the user equipment, that is, if a field used to transmit the first IP address is at a same level as the field used to transmit the flow description information, it indicates that the indication is the application granularity indication; to be specific, flow description information of all flows included in the first application cannot be reused. If the field that is used to transmit the flow description information and that is included in the session establishment message carries the first IP address of the user equipment, it indicates that the indication is the flow granularity indication; to be specific, the flow description information of the specified flow of the first application cannot be reused. For example, if the IP address of the user equipment is carried in flow description information of a flow, it indicates that the flow description information of the flow cannot be reused.

Optionally, when the field that is used to transmit the IP address of the user equipment and that is included in the session establishment message carries the first IP address, the indication information may alternatively be used to indicate, to the PCF network element, that the flow description information of the first application can be reused. Specifically, the session establishment message includes the indication information, and the indication information is used to instruct the PCF network element to reuse the flow description information of the first application after the first IP address of the user equipment changes. Specifically, if the AF network element directly carries the indication information in the session establishment message, that is, if the field used to transmit the indication information is at a same level as the field used to transmit the flow description information, it indicates that the indication is the application granularity indication; to be specific, the flow description information of all flows included in the first application can be reused. If the AF network element carries the indication information in the field that is used to transmit the flow description information and that is included in the session establishment message, it indicates that the indication is the flow granularity indication; to be specific, the flow description information of the specified flow of the first application can be reused. For example, if the indication information is carried in flow description information of a flow, it indicates that the flow description information of the flow can be reused.

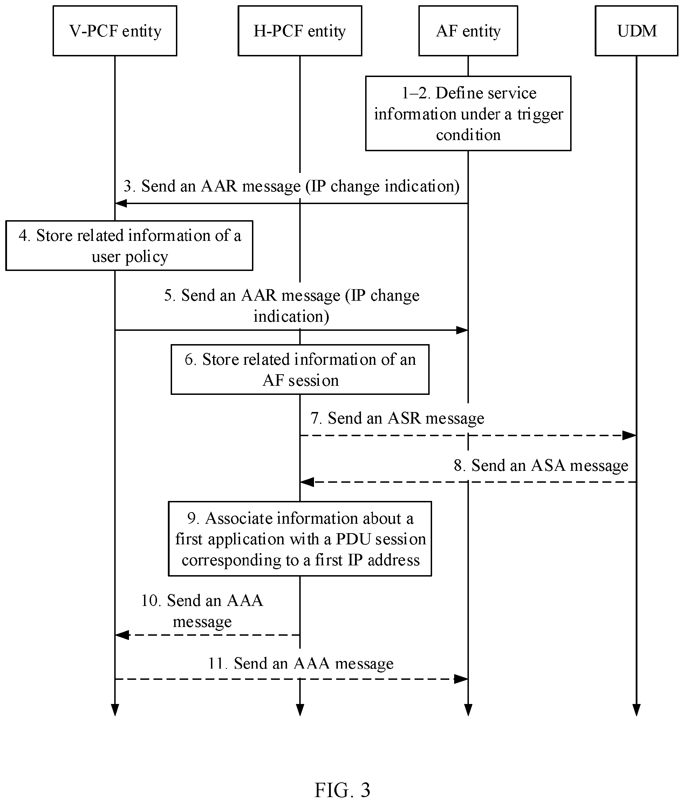

An AF session establishment procedure is used as an example, as shown in FIG. 3: 1-2. An AF network element may define service information when receiving a trigger condition such as a session establishment indication sent by user equipment. 3. The AF network element triggers session establishment between the AF network element and a PCF network element, sends a resource reservation request message (for example, an AAR (Authentication and/or Authorization Request)) to the PCF network element, and instructs, by using the resource reservation request message, the PCF network element to reuse information about first application after a first IP address of the user equipment changes (indicated by using an IP change indication in FIG. 3). The session establishment is used to establish an AF session. Further, if the user equipment is in a non-roaming state, the AF network element may directly send the resource reservation request message to the PCF network element. The PCF network element may store related information of a user policy of the AF session. If the user equipment is in a roaming state, the PCF network element may include an H-PCF network element and a V-PCF network element, where the H-PCF network element is a PCF network element in a home location of the user equipment, and the V-PCF network element is a PCF network element in a roaming location of the user equipment. The AF network element may address to the V-PCF network element based on the first IP address of the user equipment, and instruct the V-PCF network element to reuse flow description information of the first application after the first IP address of the user equipment changes. 4. The V-PCF network element may store related information of the AF session, and the roaming state is used as an example for description in FIG. 3. 5. Similarly, the V-PCF network element may also instruct, in a same manner, the H-PCF network element to reuse the flow description information of the first application after the first IP address of the user equipment changes. 6. The H-PCF network element may store related information of the AF session. 7-8. Further, the H-PCF network element may obtain subscription data of the user equipment from a UDM, for example, the H-PCF network element may obtain the subscription data by using an ASR message and an ASA message. 9. The H-PCF network element associates the information about the first application with a PDU session corresponding to the first IP address. 10-11. The H-PCF network element may return a response message (for example, an AAA (Authentication and/or Authorization Answer) message) to the AF network element by using the V-PCF network element.

Step 202: The PCF network element receives a second IP address of the user equipment from the SMF network element.

The second IP address is an address obtained after the first IP address of the user equipment changes. After the first IP address of the user equipment changes to the second IP address, the SMF network element may send the second IP address of the user equipment to the PCF network element, so that the PCF network element receives the second IP address of the user equipment. Optionally, when the second IP address received by the PCF network element is different from the first IP address, the PCF network element may determine that the first IP of the user equipment has changed.

The SMF network element may send session information to the PCF network element, where the session information carries the second IP address of the user equipment, so that the PCF network element may receive the session message and obtain the second IP address of the user equipment from the session message.

Specifically, the session information may be obtained by using a PDU session establishment procedure or a PDU session modification procedure, and corresponding session messages may be respectively corresponding to a session establishment request and a session modification request. The following separately describes the two different PDU session processing procedures.

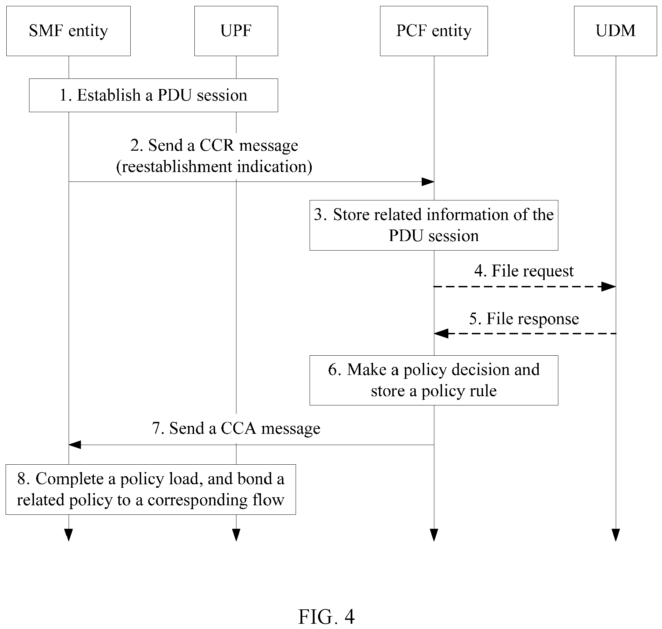

First, as shown in FIG. 4, it is assumed that the PDU session processing procedure is the PDU session establishment procedure. 1. An SMF network element may establish a PDU session with a UPF. 2. The SMF network element sends, to the PCF network element, a request for establishment and obtaining policy information. The request may be a session establishment request for a PDU-CAN session or a request for establishing a connection between the PCF network element and the SMF network element, or may be a request for directly obtaining the policy information. Therefore, the PCF network element receives the request for obtaining the policy information, and the request carries a second IP address of user equipment. In FIG. 4, an example in which the request is a CCR message is used for description. Optionally, in addition to carrying the second IP address, the request may further carry an identifier of a session corresponding to the second IP address and a first IP address or an identifier of a PDU session corresponding to the first IP address, where the identifier of the session corresponding to the second IP address may be the same as the identifier of the PDU session corresponding to the first IP address, and the information is used by the PCF to match and search for reserved information about a first application that needs to be associated. Optionally, in addition to carrying a second IP address, the request may further carry first information. The first information may also be referred to as a reestablishment indication. The first information is used to indicate that the PDU session is a reestablishment session, and the first IP address of the user equipment is modified by using a reestablishment procedure. 3. The PCF network element may store related information of the PDU session. 4-5. The PCF network element obtains subscription data of the user equipment from a UDM by using a file request message and a file response message. 6. The PCF network element makes a policy decision and stores a policy rule. 7. The PCF network element returns a related policy rule to the SMF network element by using a CCA message. 8. The SMF network element and the UPF complete a policy load, and bond the related policy to a corresponding flow.

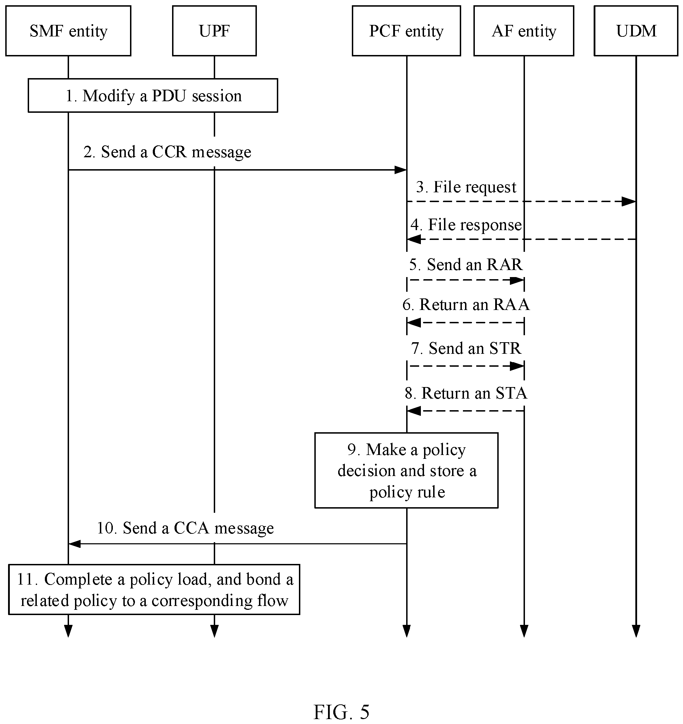

Second, as shown in FIG. 5, it is assumed that the PDU session processing procedure is the PDU session modification procedure. 1. An SMF network element and a UPF may perform PDU session modification. 2. The SMF network element may instruct, by using a session modification request, a PCF network element to modify the PDU session (which may alternatively modify a PDU-CAN session or a connection between the SMF network element and the PCF network element). Therefore, the PCF network element receives the session modification request, and the session modification request carries a second IP address of user equipment. 3-4. The PCF network element obtains subscription data of the user equipment from a UDM by using a file (profile) request message and a file response message. 5-8. When the PCF network element and an AF network element need to update an AF session, the PCF network element may store the AF session and reserve information about a first application that is transmitted by using the AF session, that is, when the PCF network element and the AF network element perform a procedure of updating the AF session (for example, update may be performed by using an RAR (Re-Auth-Request) message and an RAA (Re-Auth-Answer) message) and a procedure of deleting related information of the AF session (for example, deletion may be performed by using ASR (Abort-Session-Request) and ASA (Abort-Session-Answer) messages and STR (Session-Termination-Request) and STA (Session-Termination-Answer message) messages), if an IP address of the user equipment is modified, for information about the first application that can be reused after the IP address of the user equipment changes, the PCF network element does not perform the procedure of updating the AF session, or the procedure of deleting flow description information that is of the first application and that can be reused. 9. The PCF network element may make a policy decision based on update information and store a policy rule. 10. The PCF network element may return a related policy rule to the SMF network element by using a CCA message. 11. The SMF network element and the UPF complete a policy load, and bond the related policy to a corresponding flow.

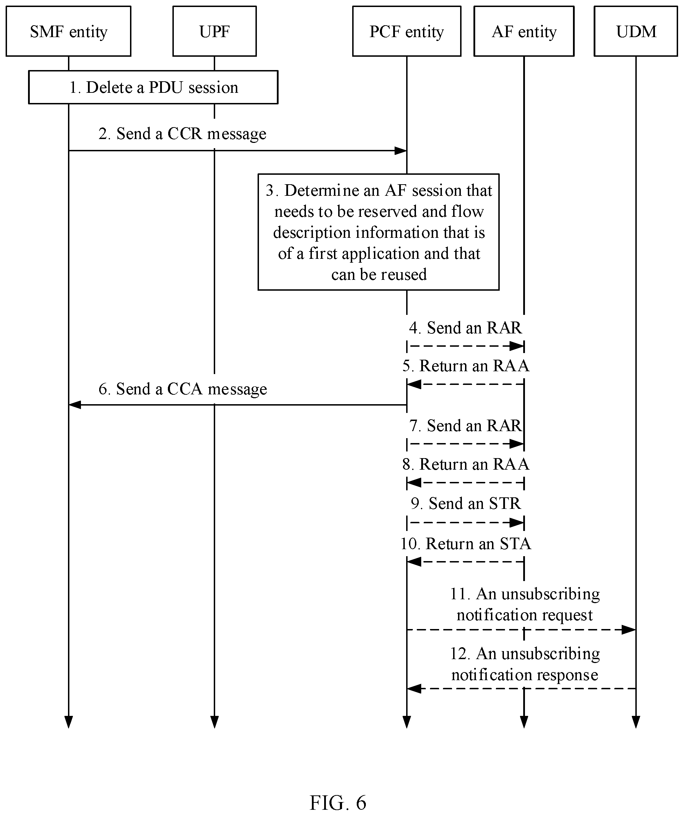

In addition, the PCF network element may further delete the PDU session corresponding to the first IP address by using a deletion procedure. In the procedure of deleting the PDU session corresponding to the first IP address, the SMF network element may instruct, by using a session deletion request, the PCF network element to delete the PDU session (which may alternatively be the PDU-CAN session or the connection between the SMF network element and the PCF network element). When the PCF network element receives the session deletion request, for information about the first application that can be reused in the AF session (for example, the flow description information that is of the first application and that can be reused), the PCF network element may store the AF session and reserve the information about the first application that is transmitted by using the AF session. The PCF network element instructs the AF network element to delete only flow description information that cannot be reused after the first IP address of the user equipment changes. For example, as shown in FIG. 6, a PDU session deletion procedure is as follows: 1. An SMF network element and a UPF may perform PDU session deletion. 2. The SMF network element instructs, by using a CCR message, a PCF network element to delete the PDU session. 3. The PCF network element determines an AF session that needs to be reserved and flow description information that is of a first application and that can be reused. 4-5. For flow description information that does not need to be reserved, the PCF network element and an AF network element may indicate, by using RAR and RAA messages, AF session information that needs to be deleted by the AF network element. 6. The PCF network element may return a response to the SMF network element by using a CCA message. 7-10. When deleting the AF session information, the PCF network element and the AF network element may correspondingly perform deletion by using ASR and ASA messages, and STR and STA messages if information about the first application that needs to be reserved does not exist. 11-12. If a UDM subscribes to a related event, the PCF network element and the UDM may delete the subscribed related event by using an unsubscribing notification request and an unsubscribing notification response. The steps do not need to be performed if a subscription notification object is information about the first application that can be reused.

Step 203: The PCF network element associates the information about the first application with a PDU session corresponding to the second IP address.

That the PCF network element associates the information about the first application with the PDU session corresponding to the second IP address may be that, the PCF reuses the information about the first application, and identifies or generates, based on the information about the first application, a policy session rule applicable to the packet data unit PDU session corresponding to the second IP address, or the PCF directly reuses, for the packet data unit PDU session corresponding to the second IP address, the policy session rule applicable to the packet data unit PDU session corresponding to the first IP address.

Specifically, the PCF network element may query, based on an identifier and PDN information of the user equipment, the information about the first application that may be reused, and associate the PDU session with information about the first application that can be reused after the IP address of the user equipment changes in the AF session. Optionally, the PCF may further query, based on the first IP address or an identifier of the PDU session corresponding to the first IP address, information about the first application that may be reused, where an identifier of the session corresponding to the second IP address may be the same as the identifier of the PDU session corresponding to the first IP address. The information about the first application is information that is about the first application and that is stored by the PCF network element when the PCF network element establishes the AF session for a first time.

Optionally, the PCF network element may further determine, based on a reestablishment indication, that the PDU session corresponding to the second IP address is to change the first IP address of the user equipment through reestablishment.

According to the information processing method in this embodiment of this application, the PCF network element may receive the information about the first application from the AF network element, associate the information about the first application with the PDU session corresponding to the first IP address of the user equipment, receive the second IP address of the user equipment from the SMF network element, and associate the information about the first application with the PDU session corresponding to the second IP address, to implement reuse of the information about the first application, thereby reducing signaling exchange and a delay of session establishment, and improving user experience.

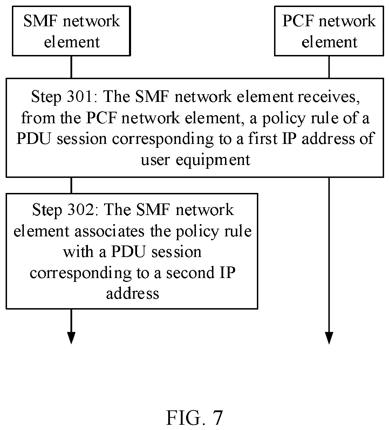

FIG. 7 is a schematic flowchart of an information processing method according to an embodiment of this application. Referring to FIG. 7, the method includes the following steps.

Step 301: An SMF network element receives, from a PCF network element, a policy rule of a PDU session corresponding to a first IP address of user equipment.

The PDU session corresponding to the first IP address may be a PDU session established for a first application of the user equipment. The first application may be an application that has a relatively low requirement for service continuity, such as a web browsing application, a download service, and an on-demand video service.

Specifically, in a procedure of establishing the PDU session corresponding to the first IP address of the user equipment UE, the PCF network element may send, to the SMF network element, the policy rule corresponding to the PDU session corresponding to the first IP address, so that the SMF network element can receive the policy rule. For example, when the user equipment initiates a session establishment request, the SMF network element may interact with a user plane device (UPF). The SMF network element may allocate the first IP address to the user equipment, select the UPF network element, and establish a connection. Then the SMF network element may interact with the PCF network element to obtain the policy rule of the PDU session corresponding to the first IP address. The information exchange between the SMF network element and the PCF network element may be completed by using a first PDU-CAN session or a connection between the SMF network element and the PCF network element.

Step 302: After a PDU session corresponding to a second IP address of the user equipment is established or the first IP address is modified into the second IP address, the SMF network element associates the policy rule with the PDU session corresponding to the second IP address.

The PDU session corresponding to the second IP address may be a PDU session re-established for the user equipment when the address of the user equipment changes to the second IP address. Alternatively, the IP address of the user equipment is modified into the second IP address by using a modification procedure, and the PDU session corresponding to the second IP address is a same session as the PDU session corresponding to the first IP address.

Specifically, when the user equipment initiates establishment of the PDU session corresponding to the second IP address, or modifies the first IP address of the user equipment into the second IP address by using the modification procedure, the SMF network element may associate the policy rule of the PDU session corresponding to the first IP address with the PDU session corresponding to the second IP address, so that when the IP address of the user equipment is the second IP address, the policy rule of the PDU session corresponding to the first IP address is reused.

For example, the UPF selected by the SMF network element for the user equipment in step 301 may be referred to as a source UPF, that is, an IP address, corresponding to the source UPF, of the user equipment is the first IP address. When the user equipment moves from a service area of the source UPF to a service area of a new UPF, the first IP address of the user equipment changes, and an IP address corresponding to the new UPF is the second IP address. When the user equipment is in the service area of the new UPF, the second IP address may be allocated to the user equipment, and the PDU session corresponding to the second IP address may be established, or the first IP address is modified into the second IP address, and the PDU session corresponding to the first IP address is used as the PDU session corresponding to the second IP address, so that the policy rule of the PDU session corresponding to the first IP address is associated with the PDU session corresponding to the second IP address.

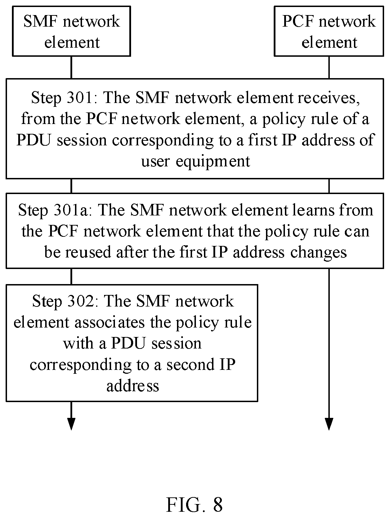

Further, referring to FIG. 8, before step 302, the method further includes step 301a. Step 301 and step 301a may be performed simultaneously, or may be performed in a random sequence.

Step 301a: The SMF network element learns from the PCF network element that the policy rule can be reused after the first IP address changes.

The PCF network element may send a first message to the SMF network element, and instruct, by using the first message, that the policy rule can be reused after the first IP address changes. Therefore, when the SMF network element receives the first message, the SMF network element may learn from the first message that the policy rule can be reused after the first IP address changes.

Specifically, the SMF network element learns from the PCF network element that the policy rule can be reused after the first IP address changes, which may include the following manners: Manner a: When the first message does not carry the first IP address of the user equipment and carries identification information of the first application, it indicates that the policy rule can be reused after the first IP address of the user equipment changes. Manner b: When the first message does not carry the first IP address of the user equipment and carries the identification information of the first application and reuse indication information, the reuse indication information is used to indicate that the policy rule can be reused after the first IP address of the user equipment changes. Manner c: When the first message carries the first IP address of the user equipment and also carries the identification information of the first application and the reuse indication information, the reuse indication information is used to indicate that the policy rule can be reused after the first IP address of the user equipment changes.

Optionally, for a manner in which the first message carries the reuse indication information, an indication that indicates the policy rule may be reused may be a session granularity indication, or a flow granularity indication. The session granularity indication indicates that a policy rule included in the PDU session corresponding to the first IP address may be reused. The flow granularity indication indicates that a policy rule that corresponds to a specific flow included in the PDU session corresponding to the first IP address may be reused. Specifically, if the first message directly carries the reuse indication, that is, the reuse indication is not included in policy rule information corresponding to the specified flow, the indication that indicates the policy rule may be reused is the session granularity indication. If the policy rule information corresponding to the specified flow of the first message carries the reuse indication information, the indication that indicates the policy rule may be reused is the flow granularity indication.

Further, if the first message does not carry indication information and carries the first IP address of the user equipment, the first message may be further used to indicate that the policy rule cannot be reused after the first IP address of the user equipment changes. Specifically, if the first message directly carries the first IP address of the user equipment, that is, the first IP address of the user equipment is not included in the policy rule information of a specified flow, it indicates that the indication is an application granularity indication; to be specific, policy rules, included in a first PDU session, of all flows cannot be reused. If the policy rule information, in the first message, of the specified flow carries the first IP address of the user equipment, it indicates that the indication is the flow granularity indication; to be specific, the policy rule, included in the first PDU session, of the specified flow cannot be reused.

Optionally, the SMF network element associates the policy rule with the PDU session corresponding to the second IP address, and may match and search for a reserved policy rule by using the first IP address or an identifier of the session corresponding to the first IP address.

Optionally, the SMF network element may further reuse a connection between the SMF network element and the PCF network element, and send the second IP address to the PCF network element by using the connection, so that the PCF network element records the second IP address.

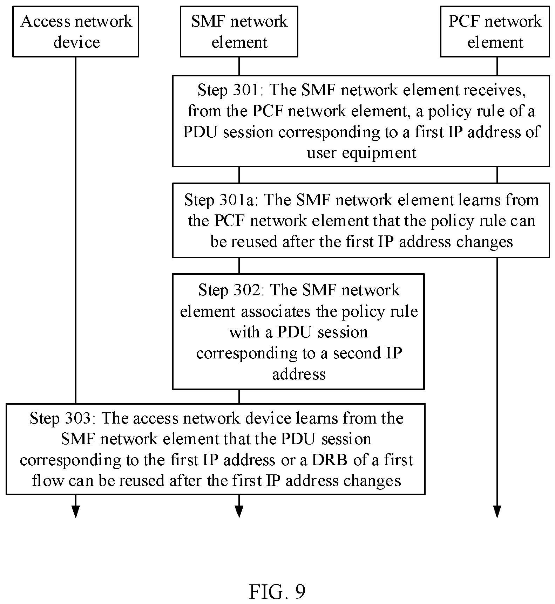

Further, referring to FIG. 9, the method further includes step 303.

Step 303: An access network device learns from the SMF network element, that the PDU session corresponding to the first IP address or a DRB of a first flow can be reused after the first IP address changes.

The SMF network element may indicate, to the access network device by using a second message (for example, a session establishment request message), that the PDU session corresponding to the first IP address or the DRB of the first flow can be reused after the first IP address changes, so that when receiving a second message, the access network device may learn, by using the second message, that the PDU session corresponding to the first IP address or the DRB of the first flow can be reused after the first IP address changes.

In addition, that the PDU session corresponding to the first IP address can be reused may include that DRBs of all flows included in the PDU session corresponding to the first IP address can be reused, or a DRB of a specified flow included in the PDU session corresponding to the first IP address can be reused. The first flow may include one or more flows, and the one or more flows belong to the flow included in the PDU session corresponding to the first IP address.

Specifically, a specific notification from the SMF network element to the access network device may be a session granularity notification, or may be a flow granularity notification. For a case in which the PDU session corresponding to the first IP address can be reused after the first IP address changes, when the notification is the session granularity notification, it indicates that the DRBs of all flows included in the PDU session corresponding to the first IP address can be reused; when the notification is the flow granularity notification, it indicates that the DRB of the specified flow included in the PDU session corresponding to the first IP address can be reused. For a case in which the DRB of the first flow can be reused after the first IP address changes, when the notification is the session granularity notification, it indicates that the DRBs of all flows included in the PDU session corresponding to the first IP address can be reused, that is, the first flow refers to all flows; when the notification is the flow granularity notification, it indicates that DRBs of some flows included in the PDU session corresponding to the first IP address can be reused, that is, the first flow refers to the specified flow.

Further, the DRB of the PDU session corresponding to the first IP address can be reused. Correspondingly, the method may further include S11-S14.

S11. The SMF network element determines that the data radio bearer DRB of the PDU session corresponding to the first IP address can be reserved after the first IP address changes.

The SMF network element learns that the data radio bearer DRB of the PDU session corresponding to the first IP address can be reserved after the first IP address changes, and determines whether access network tunnel information changes.

In a release procedure, if the tunnel information of the access network does not change, the SMF network element determines to reserve the DRB of the PDU session corresponding to the first IP address, and initiates deactivation for another PDU session whose DRB does not need to be reserved. Further, the access network device reserves the DRB. When the PDU session corresponding to the second IP address of the user equipment is established or the first IP address is modified into the second IP address, if access network tunnel information of the PDU session corresponding to the second IP address is the same as access network tunnel information of the PDU session corresponding to the first IP address, the DRB of the PDU session corresponding to the first IP address is reused.

S12. The SMF network element sends first information to the user equipment, where the first information is used to indicate that the DRB of the PDU session corresponding to the first IP address can be reserved after the first IP address changes.

The SMF network element may send the first information to the user equipment. When the user equipment receives the first information, the user equipment may learn, based on the first information, that the DRB of the PDU session corresponding to the first IP address can be reserved after the first IP address changes, so that the user equipment can reserve the DRB of the PDU session corresponding to the first IP address, and does not initiate release of the DRB. The indication sent to the user equipment may also be a session granularity indication or a flow granularity indication.

Specifically, when the user equipment moves out of a service area of a source UPF, that is, when the first IP address of the user equipment needs to change, the SMF determines that the PDU session corresponding to the first IP address needs to be released and reestablished, and then the SMF network element instructs the user equipment to release and reestablish the PDU session corresponding to the first IP address. The SMF network element sends, to the user equipment, the first information used to indicate that the DRB of the PDU session corresponding to the first IP address can be reserved after the first IP address changes. Further, when the user equipment receives the first information, the user equipment may reserve, based on the first information, the DRB of the PDU session corresponding to the first IP address, and does not initiate release of the DRB. The DRB may be reused in a subsequent session reestablishment or modification procedure. The user equipment may further initiate session release processing with the source UPF.

In addition, the SMF network element may further initiate release of a PDU-CAN session. The SMF network element instructs the PCF network element to release the PDU-CAN session. In a procedure of releasing the PDU-CAN session, the PCF network element may reserve flow description information that is of a first application and that can be reused after the first IP address of the user equipment changes. Similarly, when releasing the PDU-CAN session, the SMF network element reserves policy rule information that is of the PDU session corresponding to the first IP and that can be reused after the first IP address of the user equipment changes. In other words, only policy rule information that cannot be reused after the first IP address of the user equipment changes is released. The release herein may also be release of a connection between the SMF network element and the PCF network element. Corresponding processing is the same as the manner in which the PCF network element performs reserving processing on the policy rule information.

Further, the SMF network element may also reserve the PDU-CAN session or reserve the connection between the SMF network element and the PCF network element. If a same SMF network element is selected in a subsequent reestablishment or modification procedure, the reserved PDU-CAN session or the reserved connection between the SMF network element and the PCF network element can be reused.

S13. The SMF network element sends, to the access network device, identification information of the PDU session corresponding to the first IP address and identification information of the PDU session corresponding to the second IP address, and the PDU session corresponding to the second IP address is a PDU session obtained by reusing the DRB.

Specifically, when the user equipment moves to a service area in which a new user plane device (UPF) is located, the user equipment may initiate session establishment with the new user plane device. The session may be established by changing the first IP address of the user equipment by using a reestablishment procedure, or may be established by changing the first IP address of the user equipment by using a modification procedure. In the procedure of session reestablishment or session modification, the SMF network element may send, to the access network device, the identification information of the PDU session corresponding to the first IP address and the identification information of the PDU session corresponding to the second IP address.

In the procedure of session reestablishment or session modification, the SMF network element may further interact with the PCF network element to establish the PDU-CAN session or the connection between the SMF network element and the PCF network element, and obtain policy rule information identified or generated based on the flow description information of the first application.

S14. When the access network device receives the identification information of the PDU session corresponding to the first IP address and the identification information of the PDU session corresponding to the second IP address, the access network device reuses the DRB of the PDU session corresponding to the first IP address.

Specifically, when the access network device receives the identification information of the PDU session corresponding to the first IP address and the identification information of the PDU session corresponding to the second IP address, the access network device may reuse the DRB of the PDU session corresponding to the first IP address. To be specific, the access network device bonds the identification information of the PDU session corresponding to the second IP address to the reused DRB of the PDU session corresponding to the first IP address.

Further, a DRB corresponding to a specified flow in the PDU session corresponding to the first IP address can also be reused. Correspondingly, the method may further include S21-S27.

S21. The SMF network element obtains a flow identifier of a first flow in the PDU session corresponding to the first IP address, and sends the flow identifier to the access network device, where the flow identifier is used to associate a DRB corresponding to the first flow.

The flow identifier of the first flow may be allocated by the SMF network element. Optionally, the flow identifier of the first flow may be carried by using a first message. The SMF network element obtains the flow identifier of the first flow from the first message. In other words, the flow identifier of the first flow is allocated by the PCF network element, and the PCF network element sends the flow identifier of the first flow to the SMF network element by using the first message.

S22. When the access network device receives the flow identifier of the first flow in the PDU session corresponding to the first IP address of the user equipment, the access network device associates the flow identifier of the first flow with a DRB of the first flow.

The access network device may receive, from the SMF network element, the flow identifier of the first flow in the PDU session corresponding to the first IP address, establish an access side resource, and may associate a flow identifier of each flow included in the first flow with a corresponding DRB when establishing the DRB. After that, the access network device may notify the SMF network element of completion of establishment of the access side resource. Further, the SMF network element may modify a user plane path of a user plane device (UPF) to complete establishment of an uplink-downlink user plane path, so that session establishment is completed and uplink-downlink data transmission starts.

S23. The SMF network element determines that the DRB of the first flow can be reserved after the first IP address changes.

The SMF network element learns that the DRB of the first flow can be reserved after the first IP address changes, and determines whether access network tunnel information changes.

In the release process, if the access network tunnel information does not change, the SMF determines to reserve the DRB corresponding to the first flow and initiates deactivation for another flow whose DRB does not need to be reserved. Therefore, the access network device reserves the DRB of the first flow.

When the PDU session corresponding to the second IP address of the user equipment is established or the first IP address is modified into the second IP address, if access network tunnel information of the PDU session corresponding to the second IP address is the same as access network tunnel information of the PDU session corresponding to the first IP address, the DRB corresponding to the first flow is reused.

S24. The SMF network element sends second information to the user equipment, where the second information is used to indicate that the DRB of the first flow can be reserved after the first IP address changes.

The SMF network element may send the second information to the user equipment. When the user equipment receives the second information, the user equipment may learn, based on the second information, that the DRB of the first flow can be reserved after the first IP address changes, and the user equipment may reserve the DRB of the first flow, so that release of the DRB is not initiated. The indication sent to the user equipment may also be a session granularity indication or a flow granularity indication.

Specifically, when the user equipment moves out of the service area of the source UPF, that is, when the first IP address of the user equipment needs to change, the SMF determines that the PDU session corresponding to the first IP address needs to be released and reestablished, and then the SMF network element instructs the user equipment to release and reestablish the PDU session corresponding to the first IP address, so that the SMF network element sends, to the user equipment, the second information used to indicate that the DRB of the first flow can be reserved after the first IP address changes. Further, when the user equipment receives the second information, the user equipment may learn, based on the second information and identification information, that the DRB of the first flow can be reserved after the first IP address changes. The DRB may be reused in a subsequent session reestablishment or modification procedure. The user equipment may further initiate session release processing with the source UPF.

In addition, the SMF network element may further initiate release of a PDU-CAN session. The SMF network element instructs the PCF network element to release the PDU-CAN session. In a procedure of releasing the PDU-CAN session, the PCF network element may reserve flow description information that is of a first application and that can be reused after the first IP address of the user equipment changes. Similarly, when releasing the PDU-CAN session, the SMF network element reserves the flow description information that is of the first application and that can be reused after the first IP address of the user equipment changes. In other words, only flow description information that cannot be reused after the first IP address of the user equipment changes is released. The release herein may also be release of the connection between the SMF network element and the PCF network element or release of the policy rule information. Corresponding processing is the same as the manner in which the PCF network element performs reserving processing on the policy rule information.

Further, the SMF network element may also reserve the PDU-CAN session or reserve the connection between the SMF network element and the PCF network element. If a same SMF network element is selected in the subsequent reestablishment or modification procedure, the reserved PDU-CAN session or the reserved connection between the SMF network element and the PCF network element can be reused.

S25. In a procedure of releasing the PDU session corresponding to the first IP address, the access network device reserves the PDU session corresponding to the first IP address or the DRB of the first flow, where the DRB of the first flow can be reused after the first IP address changes.

In the procedure of releasing the PDU session corresponding to the first IP address, the access network device can reserve the PDU session corresponding to the first IP address or the DRB of the first flow. The PDU session corresponding to the first IP address is an entire PDU session that corresponds to the first IP address and that can be reused after the first IP address of the user equipment changes. The DRB of the first flow can be reused after the first IP address changes. To be specific, the access network device releases only the DRB that cannot be reused after the first IP address of the user equipment changes.

Specifically, the SMF network element may send indication information to the access network device, where the indication information is used to indicate that the PDU session corresponding to the first IP address or the DRB of the first flow can be reused after the first IP address changes, so that the access network device may determine, based on the indication information, the PDU session corresponding to the first IP address or the DRB of the first flow. To be specific, the access network device actively determines, by using the indication information transmitted by the SMF network element, the PDU session that corresponds to the first IP address and that can be reused or the DRB of the first flow.

Alternatively, in the procedure of releasing a first PDU session, the SMF network element may send, to the access network device, control information used to instruct the access network device to reserve the PDU session corresponding to the first IP address or the DRB of the first flow, so that when receiving the control information, the access network device can reserve the PDU session corresponding to the first IP address or the DRB of the first flow based on the control information, in other words, the SMF network element determines the PDU session corresponding to the first IP address or the DRB of the first flow that can be reused, that is, determines a flow whose DRB can be reserved and initiates deactivation for another flow whose DRB does not need to be reserved, so that the access network device reserves the PDU session corresponding to the first IP address or the DRB of the first flow.

S26. When the PDU session corresponding to the first IP address is reestablished or modified into the PDU session corresponding to the second IP address, the SMF network element sends, to the access network device, a flow identifier of each flow in the PDU session corresponding to the second IP address, or a flow identifier of a second flow in the PDU session corresponding to the second IP address and the flow identifier of the first flow, where the second flow is a flow obtained by reusing the DRB.

When the user equipment moves to the service area in which the new user plane device (UPF) is located, the user equipment may initiate session establishment with the new user plane device. The session may be established by changing the first IP address of the user equipment by using a reestablishment procedure, or may be established by changing the first IP address of the user equipment by using a modification procedure. When the PDU session corresponding to the first IP address is modified to the PDU session corresponding to the second IP address, a session identifier of the PDU session corresponding to the first IP address is the same as that of the PDU session corresponding to the second IP address. In the procedure in which the PDU session corresponding to the first IP address is reestablished or modified into the PDU session corresponding to the second IP address, the SMF network element sends, to the access network device, the flow identifier of each flow in the PDU session corresponding to the second IP address, or the flow identifier of the second flow in the PDU session corresponding to the second IP address and the flow identifier of the first flow, where the second flow is a flow obtained by reusing the DRB, and is used to instruct the access network device to reuse the DRB of the first flow when the DRB to the second flow is allocated.

In addition, in the procedure in which the PDU session corresponding to the first IP address is reestablished or modified into the PDU session corresponding to the second IP address, the SMF network element may further interact with the PCF network element to establish a PDU-CAN session or a connection between the SMF network element and the PCF network element, and obtain policy rule information identified or generated based on the flow description information of the first application.

S27. The access network device receives, from the SMF network element, the flow identifier of each flow in the PDU session corresponding to the second IP address, or the flow identifier of the second flow in the PDU session corresponding to the second IP address and the flow identifier of the first flow, where the second flow is a flow obtained by reusing the DRB.

When establishment of the PDU session is accepted, the access network device establishes an access side resource, and notifies the SMF network element of completion of establishment of the access side resource. The SMF network element modifies a user plane path of a user plane device (UPF) to complete establishment of an uplink-downlink user plane path. Specifically, when the access network device establishes an access side resource, the access network device receives the flow identifier of each flow that is sent by the SMF network element and that is in the PDU session corresponding to the second IP address, or the flow identifier of the second flow in the PDU session corresponding to the second IP address and the flow identifier of the first flow, where the second flow is a flow obtained by reusing the DRB. The access network device matches the received flow identifier with the reserved DRB. If a same flow is matched, a corresponding DRB may be reused by the second flow; otherwise, a new DRB is established for the second flow. In other words, the access network device can establish a new DRB resource for a new flow, and associate the reused DRB of the first flow with the corresponding flow identifier, so as to implement reuse of the DRB of the first flow.

In a scenario in which the identifier of the flow of the PDU session corresponding to the first IP address is the same as the identifier of the flow of the PDU session corresponding to the second IP address (in other words, the identification information of the first flow is the same as the identification information of the second flow), the access network device receives, from the SMF network element, the flow identifier of each flow in the PDU session corresponding to the second IP address. Because the identification information of the first flow is the same as the identification information of the second flow, the access network device searches for the reserved DRB of the first flow based on the identification information of the second flow, and uses the DRB of the first flow as a DRB of the second flow, thereby implementing reuse of the DRB.

In a scenario in which the identifier of the flow of the PDU session corresponding to the first IP address is different from the identifier of the flow of the PDU session corresponding to the second IP address (in other words, the identification information of the first flow is different from the identification information of the second flow), the access network device receives, from the SMF network element, the flow identifier of the second flow in the PDU session corresponding to the second IP address and the flow identifier of the first flow. The access network device determines, based on the identification information of the first flow through matching, the first flow corresponding to the identification information of the first flow, searches for the reserved DRB of the first flow, uses the DRB of the first flow as a DRB of the second flow, and associates the DRB with the identification information of the second flow, thereby implementing reuse of the DRB.

Before sending the flow identifier to the access network device, the SMF network element may obtain a corresponding flow identifier, and the flow identifier of the first flow may be obtained by using the foregoing step S21. The flow identifier of each flow in the PDU session corresponding to the second IP address can be assigned by the PCF network element and sent to the SMF network element. In this way, the flow identifier of each flow in the PDU session corresponding to the second IP address obtained by the SMF is global, and subsequently the access network device can directly determine the DRB associated with flow identifier of each flow. Alternatively, the flow identifier of each flow in the PDU session corresponding to the second IP address is allocated by the SMF network element. In this case, the flow identifier obtained by the SMF is localized, in other words, the access network device cannot uniquely determine the DRB associated with the flow identifier by using only the obtained flow identifier, and needs to combine a correspondence between a flow identifier of the PDU session corresponding to the first IP address and a newly allocated flow identifier to uniquely determine the DRB associated with the flow identifier. The global flow identifier can be sent by the PCF network element and sent to the access network device by using the SMF network element.

The following describes an example of establishment of a PDU session of user equipment (UE) and release of a session by moving out of a serving area of a source UPF.

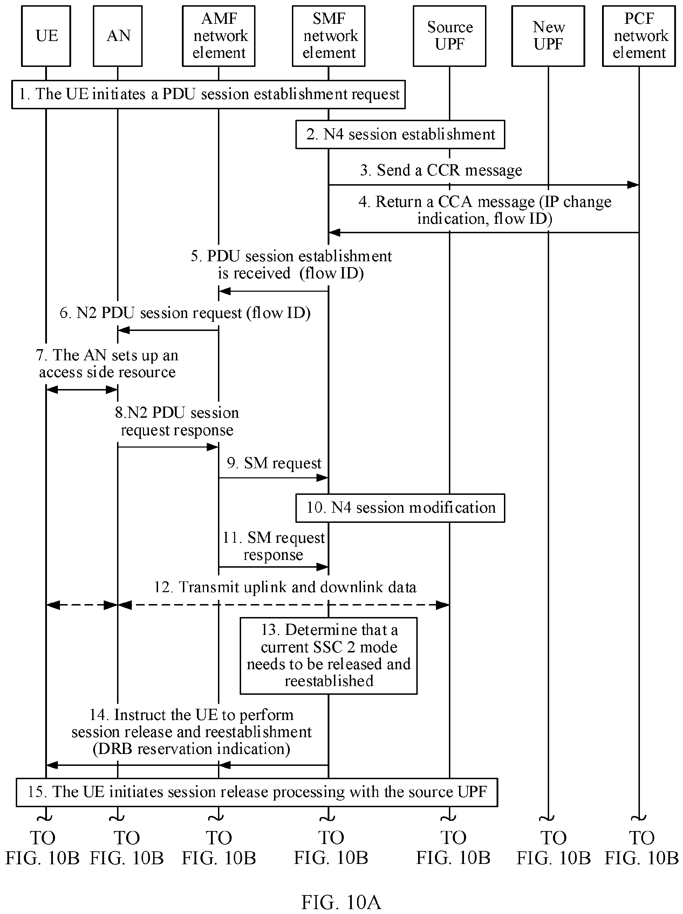

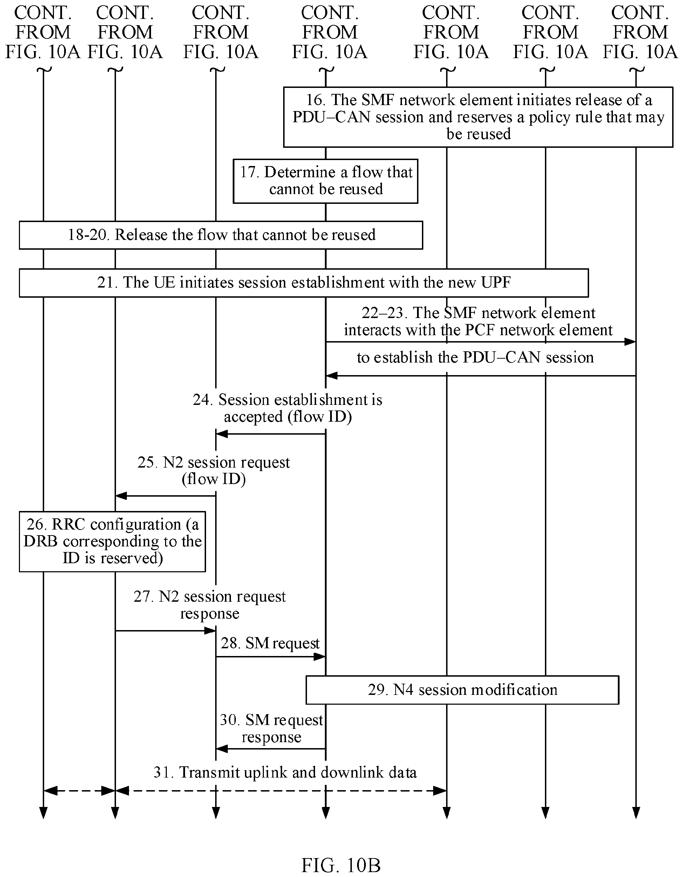

As shown in FIG. 10A and FIG. 10B, an example in which a flow identifier of a flow included in a PDU session corresponding to a second IP address is allocated by a PCF network element is used for description. When the PCF network element performs allocation, and an access network device reuses a DRB of a flow that can be reused, flow identifiers received by the access network device include only a flow ID in FIG. 10A and FIG. 10B.

A specific procedure is as follows: 1. UE initiates a PDU session establishment request. 2. An SMF network element may interact with a user plane device (UPF). The SMF network element may allocate a first IP address to the UE, select the UPF, and establish a connection. 3-4. The SMF network element and the PCF network element may establish a PDU-CAN session by exchanging a CCR message and a CCA message, and the CCA message returned by the PCF network element to the SMF network element carries a policy rule, where the policy rule (also referred to as an IP change indication) can be reused after the first IP address changes, and carries a flow identifier (also referred to as a flow ID) allocated by the PCF network element to each flow included in a PDU session corresponding to the first IP address.5-6. The SMF network element sends the flow ID to an AMF network element by using a PDU session request, and the AMF network element transmits the flow ID to the access network (AN) device by using an N2 PDU session request. 7. The access network device sets up a DRB of an access side resource based on the flow ID, and associates the DRB with a corresponding flow during setup of the DRB. 8-9. The access network device sends an N2 PDU session request response to the AMF network element, and the AMF network element sends an SM request to the SMF network element to notify the SMF network element of completion of setup of the access side resource. 10-11. The SMF network element interacts with a source UPF to perform N4 session modification, and the AMF network element sends an SM request response to the SMF network element, that is, modify a user plane path of the UPF to complete establishment of an uplink-downlink user plane path. 12. Session establishment is completed, and transmission of uplink and downlink data starts. 13. When the UE moves out of a service area of the source UPF, the SMF determines that a current SSC 2 session needs to be released and reestablished. 14. The SMF network element instructs the UE to release a current session and reestablish a session. Optionally, a notification message carries a DRB reservation indication, to be specific, for a PDU session or a flow included in a PDU session that can be reused, the UE is instructed to reserve a corresponding DRB. 15. The UE initiates session release processing with the source UPF. 16. The SMF network element initiates release of the PDU-CAN session and the PCF network element reserves the policy rule that can be reused. Optionally, when a same SMF network element is selected for releasing and reestablishing the session, the PDU-CAN session may also be reserved for reuse. 17. The SMF network element determines, based on the IP change indication, that only a flow that cannot be reused needs to be released. 18-20. A flow release procedure is initiated to release the flow that cannot be reused after an IP address changes. The access network device releases a DRB corresponding to the flow that cannot be reused, that is, reserves the DRB of the flow that can be reused. 21. The UE initiates session establishment with a new UPF. 22-23. The SMF network element interacts with the PCF network element to establish the PDU-CAN session. Specifically, the PCF network element associates AF session information with a corresponding policy rule, and the PCF network element indicates, to the SMF network element by using a response message, that the policy rule can be reused after the first IP address changes, and carries the flow ID allocated by the PCF network element to each flow. 24-31. A PDU session establishment is accepted and an access side resource is set up, which are learned by the SMF network element. The SMF network element modifies a user plane path of the UPF to complete establishment of an uplink-downlink user plane path. A specific procedure is as follows: 24. The SMF network element sends the flow ID to the AMF network element by using a session establishment accept message. 25. The AMF network element transmits the flow ID to the AN by using an N2 session request message. 26. The AN establishes the access side resource based on an RRC configuration. 27. The AN sends an N2 session request response to the AMF network element. 28. The AMF network element sends an SM request to the SMF network element. 29. The SMF network element interacts with the new UPF to modify an N4 session. 30. The SMF network element sends an SM request response to the AMF network element. 31. The session establishment is completed and uplink and downlink data is transmitted.

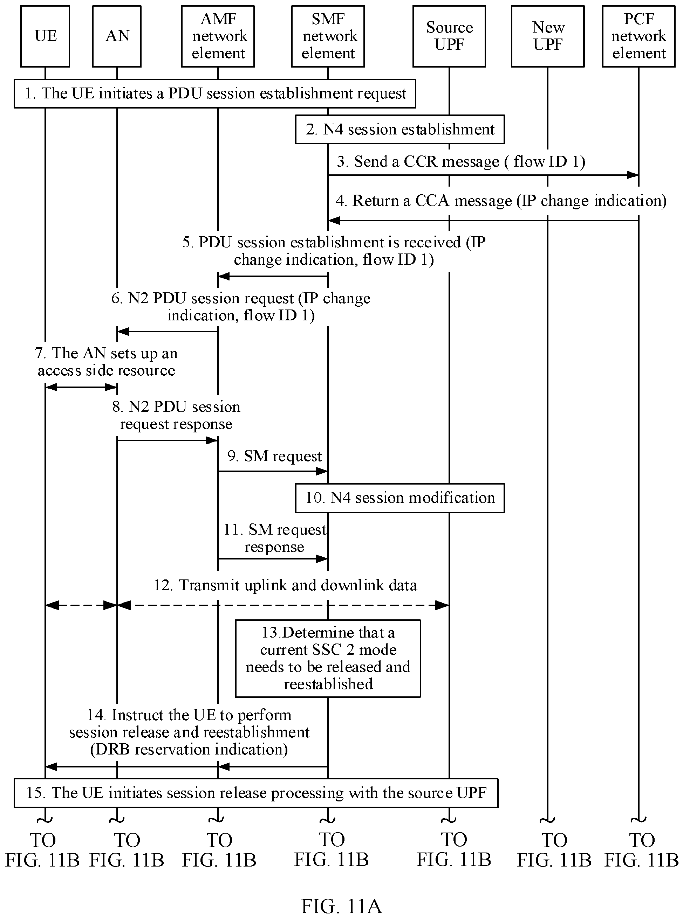

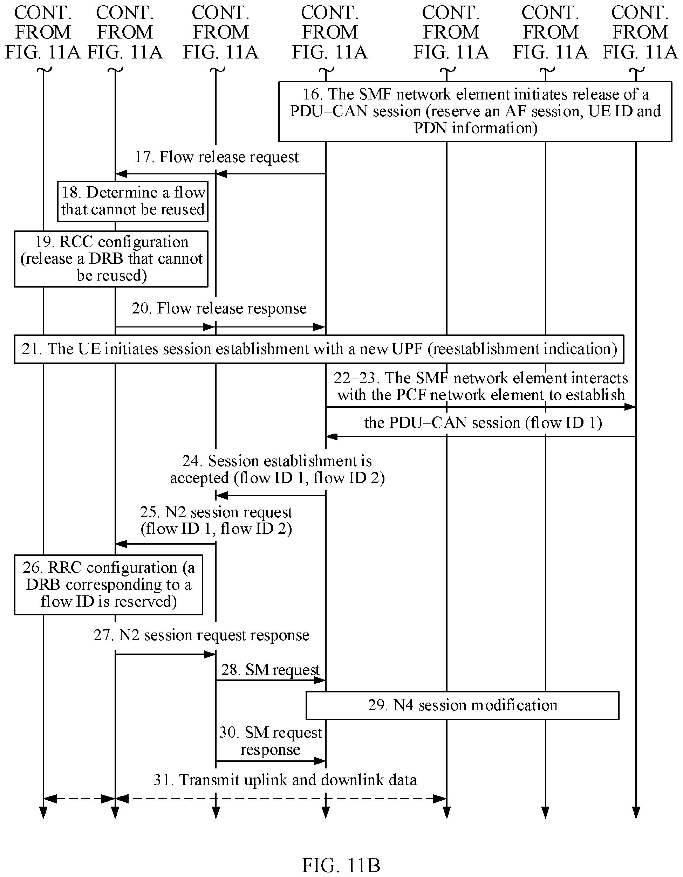

As shown in FIG. 11A and FIG. 11B, an example in which a flow identifier of a flow included in a PDU session corresponding to a second IP address is allocated by an SMF network element is used for description. When the SMF network element performs allocation, when an access network device reuses a DRB of a flow that can be reused, flow identifiers received by the access network device include a flow ID 1 and a flow ID 2 in FIG. 11A and FIG. 11B.

Specifically, steps 1 to 16 in FIG. 11A and FIG. 11B are consistent with steps 1 to 16 in FIG. 10A and FIG. 10B. For details, refer to the description corresponding to FIG. 10A and FIG. 10B. 17. The SMF network element sends a flow release request to the access network (AN) device. 18. The AN determines, based on an indication indicating that a PDU session corresponding to a first IP address or a DRB of a first flow can be reused after the first IP address changes, that only a flow that cannot be reused needs to be released. 19. The AN releases a DRB corresponding to the flow that cannot be reused, that is, reserves a DRB of a flow that can be reused. 20. The AN sends a flow release response to the SMF network element by using an AMF network element. 21. The UE initiates session establishment with a new UPF. Optionally, a reestablishment indication may be carried to indicate that the session is a reestablished session. 22-23. The SMF network element interacts with the PCF network element to establish the PDU-CAN session. Specifically, the PCF network element associates AF session information with a corresponding policy rule, and the PCF network element indicates, to the SMF network element by using a response message, that the policy rule can be reused after the first IP address changes, and carries the flow ID 1, where the flow ID 1 is allocated by the SMF network element during initial session establishment. 24-31. PDU session establishment is accepted and an access side resource is set up, which are learned by the SMF network element. The SMF network element modifies a user plane path of the UPF to complete establishment of an uplink-downlink user plane path. A specific procedure is as follows: 24. The SMF network element sends the flow ID 1 and the flow ID 2 to the AMF network element by using a session establishment accept message, where the flow ID 2 is allocated by the SMF network element during session reestablishment. 25. The AMF network element transmits the flow ID 1 and the flow ID 2 to the AN by using an N2 session request message. 26. The AN establishes the access side resource based on an RRC configuration. 27. The AN sends an N2 session request response to the AMF network element. 28. The AMF network element sends an SM request to the SMF network element. 29. The SMF network element interacts with the new UPF to modify an N4 session. 30. The SMF network element sends an SM request response to the AMF network element. 31. The session establishment is completed and uplink and downlink data is transmitted.

In the information processing method provided in this embodiment of this application, that the information about the first application can be reused after the first IP address of the user equipment changes is an indication sent by the application function network element to the policy control function network element, that the policy rule can be reused after the first IP address changes is an indication sent by the corresponding policy function network element to the session management function network element, and that the PDU session corresponding to the first IP address or the DRB of the first flow can be reused after the first IP address changes is an indication sent by the session management function network element to the access network device or the user equipment. The indications may be at a session granularity or a flow granularity.

According to the information processing method in this embodiment of this application, the session management function network element receives, from the policy control function network element, the policy rule of the PDU session corresponding to the first IP address of the user equipment, after establishing the PDU session corresponding to the second IP address of the user equipment or modifying the first IP address into the second IP address, associates the policy rule with the PDU session corresponding to the second IP address, instructs the user equipment and the access network device to reserve the DRB that can be reused after the first IP address of the user equipment changes, and reuses the reserved DRB in the subsequent PDU session, thereby reducing signaling exchange and a delay of session establishment, and improving user experience.

The solutions provided in the embodiments of this application are mainly described from a perspective of interaction between network elements. It may be understood that, to implement the foregoing functions, network elements such as the policy control function network element, the application function network element, the session management function network element and the access network device include corresponding hardware structures and/or software modules for executing the functions. A person skilled in the art should be easily aware that, with reference to the examples described in the embodiments disclosed in this specification, network elements and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional module division may be performed on the policy control function network element, the application function network element, the session management function network element, the access network device, and the like based on the foregoing method examples. For example, function modules may be divided based on functions, or two or more functions may be integrated into one processing module. The integrated module may be implemented in a form of hardware, or may be implemented in a form of a software function module. It should be noted that the module division in the embodiments of this application is an example, and is merely logical function division, and there may be other division manners in actual implementation.

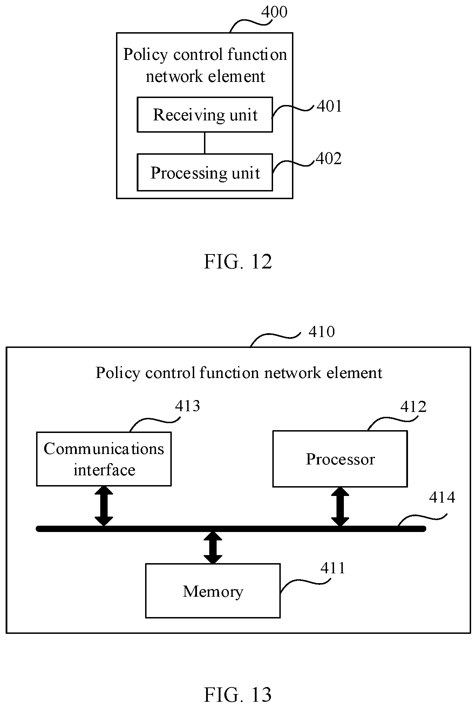

In a case in which function modules are divided based on functions, FIG. 12 is a possible schematic structural diagram of the policy control function network element in the foregoing embodiment. A policy control function network element 400 includes a receiving unit 401 and a processing unit 402.

The receiving unit 401 is configured to support the policy control function network element 400 in performing step 201 of receiving information about the first application and step 202 of receiving the session modification or deletion request from the session management function network element in the method shown in FIG. 2. The processing unit 402 is configured to support the policy control function network element 400 in performing step 201 of associating the information about the first application with the PDU session corresponding to the first IP address, and step 203 of reserving the information about the first application in the method shown in FIG. 2, and/or other processes of technologies described in this specification. All related content of the steps in the foregoing method embodiments can be used for functional descriptions of the corresponding function modules. Details are not described herein again.

In hardware implementation, the processing unit 402 may be a processor, the receiving unit 401 may be a receiver, and a communications interface may exist between the receiver and a transmitter.

FIG. 13 is a possible schematic diagram of a logical structure of a policy control function network element 410 in the foregoing embodiment according to an embodiment of this application. The policy control function network element 410 includes a processor 412, a communications interface 413, a memory 411, and a bus 414. The processor 412, the communications interface 413, and the memory 411 are connected to each other by using the bus 414. In an embodiment of the present invention, the processor 412 is configured to control and manage an action of the policy control function network element 410, for example, the processor 412 is configured to support the policy control function network element 410 in performing step 201 of associating the information about the first application with the PDU session corresponding to the first IP address, and step 203 of reserving the information about the first application in the method shown in FIG. 2, and/or is configured to perform other processes of the technologies described in this specification. The communications interface 413 is configured to support the policy control function network element 410 in performing communication. The memory 411 is configured to store program code and data of the policy control function network element 410.

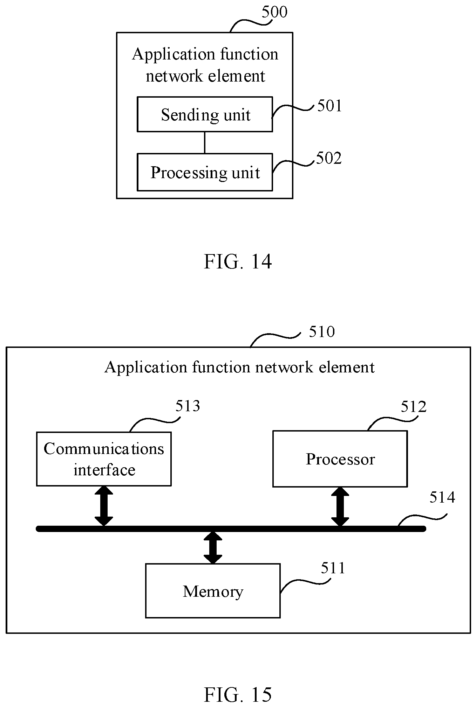

In a case in which function modules are divided based on functions, FIG. 14 is a possible schematic structural diagram of the application function network element in the foregoing embodiment. An application function network element 500 includes a sending unit 501 and a processing unit 502.

The sending unit 501 is configured to support the application function network element 500 in performing the step of sending the information about the first application to a PCF network element in the method shown in FIG. 2. The processing unit 502 is configured to support the application function network element 500 in performing the step of indicating, to the PCF network element, that the information about the first application can be reused after the first IP address of the user equipment changes in the method shown in FIG. 2. All related content of the steps in the foregoing method embodiments can be used for functional descriptions of the corresponding function modules. Details are not described herein again.

In hardware implementation, the processing unit 502 may be a processor, the sending unit 501 may be a transmitter, and a communications interface exist between the transmitter and a receiver.

FIG. 15 is a possible schematic diagram of a logical structure of the application function network element 510 in the foregoing embodiment according to an embodiment of this application. The application function network element 510 includes a processor 512, a communications interface 513, a memory 511, and a bus 514. The processor 512, the communications interface 513, and the memory 511 are connected to each other by using the bus 514. In an embodiment of the present invention, the processor 512 is configured to control and manage an action of the application function network element 510. For example, the processor 512 is configured to support the application function network element 510 in performing the step of indicating, to the PCF network element, that the information about the first application can be reused after the first IP address of the user equipment changes in the method shown in FIG. 2, and/or is configured to perform other processes of the technologies described in this specification. The communications interface 513 is configured to support the application function network element 510 in performing communication. The memory 511 is configured to store program code and data of the application function network element 510.

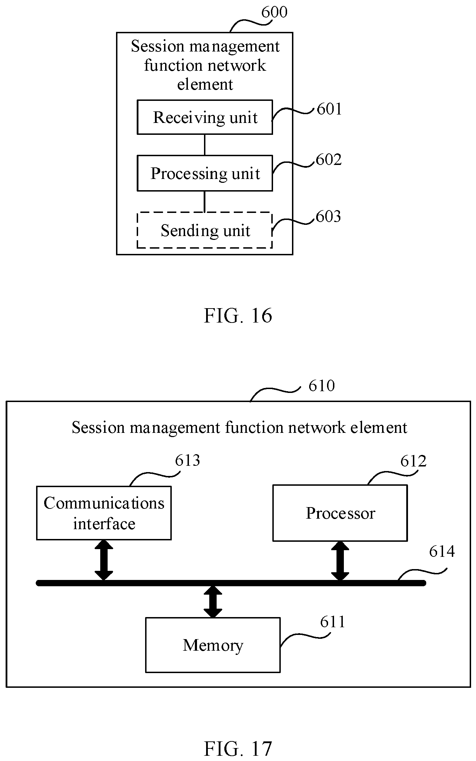

In a case in which function modules are divided based on functions, FIG. 16 is a possible schematic structural diagram of a session management function network element in the foregoing embodiment. The session management function network element 600 includes a receiving unit 601 and a processing unit 602. The receiving unit 601 is configured to support the session management function network element 600 in performing step 301 in any one of the methods shown in FIG. 7 to FIG. 9. The processing unit 602 is configured to support the session management function network element 600 in performing step 302 in the method shown in any one of FIG. 7 to FIG. 9, step 301a in FIG. 8 or FIG. 9, step of determining that a DRB of a PDU session corresponding to a first IP address can be reserved after the first IP address changes, and step of determining a DRB of a first flow can be reserved after the first IP address changes. Further, the session management function network element 600 further includes a sending unit 603. The sending unit 603 is configured to support the session management function network element 600 in performing a step of sending first information to user equipment, a step of sending second information to the user equipment, a step of sending, to an access network device, a flow identifier of each flow in a PDU session corresponding to a second IP address, or a step of sending, to the access network device, a flow identifier of a second flow in the PDU session corresponding to the second IP address and a flow identifier of the first flow. All related content of the steps in the foregoing method embodiments can be used for functional descriptions of the corresponding function modules. Details are not described herein again.

In hardware implementation, the processing unit 602 may be a processor, the receiving unit 601 may be a receiver, the sending unit 603 may be a transmitter, and a communications interface may exist between the transmitter and a receiver.

FIG. 17 is a possible schematic diagram of a logical structure of a session management function network element 610 in the foregoing embodiment according to an embodiment of this application. The session management function network element 610 includes a processor 612, a communications interface 613, a memory 611, and a bus 614. The processor 612, the communications interface 613, and the memory 611 are connected to each other by using the bus 614. In an embodiment of the present invention, the processor 612 is configured to control and manage an action of the session management function network element 610. For example, the processor 612 is configured to support the session management function network element 610 in performing step 302 in the method shown in any one of FIG. 7 to FIG. 9, step 301a in FIG. 8 or FIG. 9, step of determining that a DRB of a PDU session corresponding to a first IP address can be reserved after the first IP address changes, and step of determining a DRB of a first flow can be reserved after the first IP address changes, and/or is configured to perform other processes of the technologies described in this specification. The communications interface 613 is configured to support the session management function network element 610 in performing communication. The memory 611 is configured to store program code and data of the session management function network element 610.

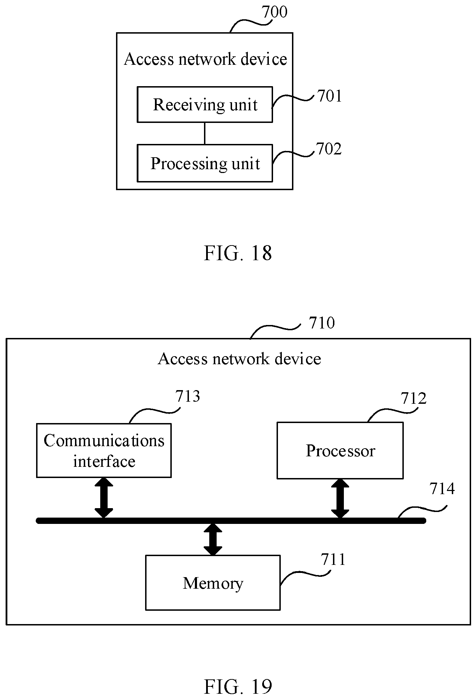

In a case in which function modules are divided based on functions, FIG. 18 is a possible schematic structural diagram of the access network device in the foregoing embodiment. An access network device 700 includes a receiving unit 701 and a processing unit 702.

The receiving unit 701 is configured to support the access network device 700 in receiving, from a session management function network element, a flow identifier of a first flow in a PDU session corresponding to a first IP address of user equipment. The processing unit 702 is configured to support the access network device 700 in performing step 303 in FIG. 9 and a step of reserving the PDU session corresponding to the first IP address or a DRB of the first flow in a procedure of releasing the PDU session corresponding to the first IP address. All related content of the steps in the foregoing method embodiments can be used for functional descriptions of the corresponding function modules. Details are not described herein again.

In hardware implementation, the processing unit 702 may be a processor, the receiving unit 701 may be a receiver, and a communications interface may exist between the receiver and a transmitter.

FIG. 19 is a possible schematic diagram of a logical structure of an access network device 710 in the foregoing embodiment according to an embodiment of this application. The access network device 710 includes a processor 712, a communications interface 713, a memory 711, and a bus 714. The processor 712, the communications interface 713, and the memory 711 are connected to each other by using the bus 714. In an embodiment of the present invention, the processor 712 is configured to control and manage an action of the access network device 710. For example, the processor 712 is configured to support the access network device 700 in performing step 303 in FIG. 9, and a step of reserving a PDU session corresponding to a first IP address or a DRB of a first flow in a procedure of releasing the PDU session corresponding to the first IP address, and/or is configured to perform other processes of the technologies described in this specification. The communications interface 713 is configured to support the access network device 710 in performing communication. The memory 711 is configured to store program code and data of the access network device 710.

The processor 412 in FIG. 13, the processor 512 in FIG. 15, the processor 612 in FIG. 17, or the processor 712 in FIG. 19 may be a central processing unit, a general purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. The bus 414 in FIG. 13, the bus 514 in FIG. 15, the bus 614 in FIG. 17, or the bus 714 in FIG. 19 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 13, FIG. 15, FIG. 17 and FIG. 19, but this does not mean that there is only one bus or only one type of bus.

In another embodiment of this application, a computer-readable storage medium is further provided, and a computer executable instruction is stored in the computer-readable storage medium. When at least one processor of a device executes the computer executable instruction, the device is enabled to perform the information processing method corresponding to any one of FIG. 2 to FIG. 11A and FIG. 11B.

In another embodiment of this application, a computer program product is further provided. The computer program product includes a computer executable instruction, and the computer executable instruction is stored in a computer-readable storage medium. At least one processor of a device may read the computer executable instruction from the computer-readable storage medium, and the at least one processor performs the computer executable instruction, to enable the device to implement the information processing method corresponding to any one of FIG. 2 to FIG. 11A and FIG. 11B.

According to another embodiment of this application, a chip system is provided, where the chip system includes a processor, and the processor is configured to support a policy control function network element, an application function network element, a session management function network element, or an access network device in implementing functions in the foregoing aspects, for example, generating or processing information in the foregoing methods. In a possible implementation, the chip system further includes a memory, and the memory is configured to store a program instruction and data that are necessary for the policy control function network element, the application function network element, the session management function network element, or the access network device. The chip system may include a chip, or may include a chip and another discrete device.

In another embodiment of this application, a system is further provided, and the system includes a policy control function network element, an application function network element, a session management function network element, an access network device, and user equipment. The policy control function network element is the policy control function network element shown in FIG. 12 or FIG. 13; and/or the application function network element is the application function network element shown in FIG. 14 or FIG. 15; and/or the session management function network element is the session management function network element shown in FIG. 16 or FIG. 17; and/or the access network device is the access network device shown in FIG. 18 or FIG. 19.

In the system provided in this embodiment of this application, the system may implement reuse of information about a first application, reuse of a policy rule of a PDU session corresponding to a first IP address, or reuse of a PDU session corresponding to a first IP address or a DRB of a flow, thereby reducing signaling exchange and a delay of session establishment, and improving user experience.

Finally, it should be noted that the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An information processing method, wherein the method comprises:
receiving, by a policy control function network element, information about a first application from an application function network element, and associating the information about the first application with a packet data unit PDU session corresponding to a first internet protocol IP address of user equipment;
receiving, by the policy control function network element, a second IP address of the user equipment from a session management function network element; and
associating, by the policy control function network element, the information about the first application with a PDU session corresponding to the second IP address.

2. The method according to claim 1, wherein the receiving, by the policy control function network element, a second IP address of the user equipment from a session management function network element comprises:
receiving, by the policy control function network element, a session establishment request from the session management function network element, wherein the session establishment request is used to establish the PDU session corresponding to the second IP address, the session establishment request carries the second IP address and first information, and the first information is used to indicate that the PDU session corresponding to the second IP address is a reestablished PDU session.

3. The method according to claim 1 or 2, wherein the method further comprises:
receiving, by the policy control function network element, a session modification request or a session deletion request from the session management function network element, wherein the session modification request is used to modify the first IP address into the second IP address, and the session deletion request is used to delete the PDU session corresponding to the first IP address; and
reserving, by the policy control function network element, the information about the first application.

4. The method according to any one of claims 1 to 3, wherein the information about the first application comprises flow description information of the first application; and
the method further comprises:
learning, by the policy control function network element from the application function network element, that the information about the first application can be reused after the first IP address changes.

5. The method according to claim 4, wherein the learning, by the policy control function network element from the application function network element, that the information about the first application can be reused after the first IP address changes comprises that:
the information about the first application does not comprise the first IP address;
or,
the information about the first application comprises indication information, and the indication information is used to indicate that the information about the first application can be reused after the first IP address changes.

6. An information processing method, wherein the method comprises:
sending, by an application function network element, information about a first application to a policy control function network element, wherein the information about the first application comprises flow description information of the first application; and
indicating, by the application function network element to the policy control function network element, that the information about the first application can be reused after a first internet protocol IP address of user equipment changes.

7. The method according to claim 6, wherein the indicating, by the application function network element to the policy function network element, that the information about the first application can be reused after a first IP address changes comprises that:
the information about the first application does not comprise the first IP address;
or,
the information about the first application comprises indication information, and the indication information is used to indicate that the information about the first application can be reused after the first IP address changes.

8. An information processing method, wherein the method comprises:
receiving, by a session management function network element from a policy control function network element, a policy rule of a PDU session corresponding to a first IP address of user equipment; and
after establishing a PDU session corresponding to a second IP address of the user equipment or modifying the first IP address into the second IP address, associating, by the session management function network element, the policy rule with the PDU session corresponding to the second IP address.

9. The method according to claim 8, wherein the method further comprises:
learning, by the session management function network element from the policy control function network element, that the policy rule can be reused after the first IP address changes.

10. The method according to claim 8 or 9, wherein the method further comprises:
determining, by the session management function network element, that a data radio bearer DRB of the PDU session corresponding to the first IP address can be reserved after the first IP address changes; and
sending, by the session management function network element, first information to the user equipment, wherein the first information is used to indicate that the DRB of the PDU session corresponding to the first IP address can be reserved after the first IP address changes.

11. The method according to claim 10, wherein the method further comprises:
sending, by the session management function network element to an access network device, identification information of the PDU session corresponding to the first IP address and identification information of the PDU session corresponding to the second IP address, wherein the PDU session corresponding to the second IP address is a PDU session obtained by reusing the DRB.

12. The method according to claim 8 or 9, wherein the method further comprises:
obtaining, by the session management function network element, a flow identifier of a first flow in the PDU session corresponding to the first IP address, and sending the flow identifier to an access network device, wherein the flow identifier is used to associate a DRB corresponding to the first flow;
determining, by the session management function network element, that the DRB of the first flow can be reserved after the first IP address changes; and
sending, by the session management function network element, second information to the user equipment, wherein the second information is used to indicate that the DRB of the first flow can be reserved after the first IP address changes.

13. The method according to claim 12, wherein the method further comprises:
sending, by the session management function network element to the access network device, a flow identifier of each flow in the PDU session corresponding to the second IP address; or
sending, by the session management function network element to the access network device, a flow identifier of a second flow in the PDU session corresponding to the second IP address and the flow identifier of the first flow, wherein the second flow is a flow obtained by reusing the DRB.

14. An information processing method, wherein the method comprises:
receiving, by an access network device from a session management function network element, a flow identifier of a first flow in a PDU session corresponding to a first IP address of user equipment;
associating, by the access network device, the flow identifier of the first flow with a data radio bearer DRB of the first flow; and
in a procedure of releasing the PDU session corresponding to the first IP address, reserving, by the access network device, the PDU session corresponding to the first IP address or the DRB of the first flow, wherein the DRB can be reused after the first IP address changes.

15. The method according to claim 14, wherein the method further comprises:
learning, by the access network device from the session management function network element, that the PDU session corresponding to the first IP address or the DRB of the first flow can be reused after the first IP address changes.

16. The method according to claim 14 or 15, wherein the method further comprises:
when establishing a PDU session corresponding to a second IP address of the user equipment or modifying the first IP address into the second IP address, reusing, by the access network device, the PDU session corresponding to the first IP address or the DRB of the first flow.

17. A policy control function network element, wherein the policy control function network element comprises:
a receiving unit, configured to receive information about a first application from an application function network element; and
a processing unit, configured to associate the information about the first application with a packet data unit PDU session corresponding to a first internet protocol IP address of user equipment, wherein
the receiving unit is further configured to receive a second IP address of the user equipment from a session management function network element, and
the processing unit is further configured to associate the information about the first application with a PDU session corresponding to the second IP address.

18. The policy control function network element according to claim 17, wherein the receiving unit is specifically configured to:
receive a session establishment request from the session management function network element, wherein the session establishment request is used to establish the PDU session corresponding to the second IP address, the session establishment request carries the second IP address and first information, and the first information is used to indicate that the PDU session corresponding to the second IP address is a reestablished PDU session.

19. The policy control function network element according to claim 17 or 18, wherein
the receiving unit is further configured to receive a session modification request or a session deletion request from the session management function network element, the session modification request is used to modify the first IP address into the second IP address, and the session deletion request is used to delete the PDU session corresponding to the first IP address; and
the processing unit is further configured to reserve the information about the first application.

20. The policy control function network element according to any one of claims 17 to 19, wherein the information about the first application comprises flow description information of the first application; and
the processing unit is further configured to learn, from the application function network element, that the information about the first application can be reused after the first IP address changes.

21. The policy control function network element according to claim 20, wherein the processing unit is specifically configured to: from the application function network element, comprises:
when the information about the first application does not comprise the first IP address, learn that the information about the first application can be reused after the first IP address changes;
or,
when the information about the first application comprises indication information, learn that the information about the first application can be reused after the first IP address changes, and the indication information is used to indicate that the information about the first application can be reused after the first IP address changes.

22. An application function network element, wherein the application function network element comprises:
a sending unit, configured to send information about a first application to a policy control function network element, wherein the information about the first application comprises flow description information of the first application; and
a processing unit, configured to indicate, to the policy function network element, that the information about the first application can be reused after a first internet protocol IP address of user equipment changes.

23. The application function network element according to claim 22, wherein the processing unit is specifically configured to:
when the information about the first application does not comprise the first IP address, indicate, to the policy function network element, that the information about the first application can be reused after the first internet protocol IP address of user equipment changes;
or,
when the information about the first application comprises indication information, indicate, to the policy function network element, that the information about the first application can be reused after the first internet protocol IP address of user equipment changes, and the indication information is used to indicate that the information about the first application can be reused after the first IP address changes.

24. A session management function network element, wherein the session management function network element comprises:
a receiving unit, configured to receive, from a policy control function network element, a policy rule of a PDU session corresponding to a first IP address of user equipment; and
a processing unit, configured to associate, after a PDU session corresponding to a second IP address of the user equipment is established or the first IP address is modified into the second IP address, the policy rule with the PDU session corresponding to the second IP address.

25. The session management function network element according to claim 24, wherein the processing unit is specifically configured to:
learn, from the policy control function network element, that the policy rule can be reused after the first IP address changes.

26. The session management function network element according to claim 24 or 25, wherein
the processing unit is further configured to determine that a data radio bearer DRB of the PDU session corresponding to the first IP address can be reserved after the first IP address changes; and
the session management function network element further comprises a sending unit, wherein the sending unit is configured to send first information to the user equipment, and the first information is used to indicate that the DRB of the PDU session corresponding to the first IP address can be reserved after the first IP address changes.

27. The session management function network element according to claim 26, wherein
the sending unit is further configured to send, to an access network device, identification information of the PDU session corresponding to the first IP address and identification information of the PDU session corresponding to the second IP address, and the PDU session corresponding to the second IP address is a PDU session obtained by reusing the DRB.

28. The session management function network element according to claim 24 or 25, wherein
the receiving unit is further configured to obtain a flow identifier of a first flow in the PDU session corresponding to the first IP address, and send the flow identifier to an access network device, wherein the flow identifier is used to associate a DRB corresponding to the first flow;
the processing unit is further configured to determine that the DRB of the first flow can be reserved after the first IP address changes; and
the session management function network element further comprises a sending unit, wherein the sending unit is configured to send second information to the user equipment, and the second information is used to indicate that the DRB of the first flow can be reserved after the first IP address changes.

29. The session management function network element according to claim 28, wherein
the sending unit is further configured to send, to the access network device, a flow identifier of each flow in the PDU session corresponding to the second IP address; or
the sending unit is further configured to send, to the access network device, a flow identifier of a second flow in the PDU session corresponding to the second IP address and the flow identifier of the first flow, wherein the second flow is a flow obtained by reusing the DRB.

30. An access network device, wherein the access network device comprises:
a receiving unit, configured to receive, from a session management function network element, a flow identifier of a first flow in a PDU session corresponding to a first IP address of user equipment; and
a processing unit, configured to associate the flow identifier of the first flow with a data radio bearer DRB of the first flow, wherein
the processing unit is further configured to: in a procedure of releasing the PDU session corresponding to the first IP address, reserve the PDU session corresponding to the first IP address or the DRB of the first flow, wherein the DRB can be reused after the first IP address changes.

31. The access network device according to claim 30, wherein the processing unit is further configured to:
learn, from the session management function network element, that the PDU session corresponding to the first IP address or the DRB of the first flow can be reused after the first IP address changes.

32. The access network device according to claim 30 or 31, wherein the processing unit is further configured to:
when establishing a PDU session corresponding to a second IP address of the user equipment or modifying the first IP address into the second IP address, reuse the PDU session corresponding to the first IP address or the DRB of the first flow.

33. A device, wherein the device comprises a processor, a memory, a communications interface and a bus, the processor, the memory, and the communications interface are connected by using the bus, the memory stores code and data, and the processor runs the code in the memory, to enable the device to perform the information processing method according to any one of claims 1 to 5, the information processing method according to any one of claims 6 and 7, the information processing method according to any one of claims 8 to 13, or the information processing method according to any one of claims 14 to 16.
